# EUROPEAN PATENT SPECIFICATION

(11) **EP 4 414 227 B1**
(45) Date of publication and mention of the grant of the patent: **24.09.2025**
(21) Application number: 24155177.9
(22) Date of filing: 01.02.2024
(51) Int. Cl.: B60T 11/04, B60T 13/74, B60T 11/06

(54) **ELECTRONIC MECHANICAL BRAKING APPARATUS**
ELEKTRONISCH-MECHANISCHE BREMSVORRICHTUNG
DISPOSITIF DE FREINAGE ÉLECTRONIQUE-MÉCANIQUE

(30) Priority: 10.02.2023 CN 202310138380
(43) Date of publication of application: 14.08.2024
(73) Proprietor: Huawei Digital Power Technologies Co., Ltd., Shenzhen, Guangdong 518043 (CN)
(72) Inventor: FANG, Zeyuan, Shenzhen, 518043 (CN); HE, Yuhui, Shenzhen, 518043 (CN)
(74) Representative: Gill Jennings & Every LLP

(56) References cited:
- DE-A1- 102021 110 474
- US-A1- 2022 348 175
- US-A1- 2022 371 561

## Description

### TECHNICAL FIELD

Embodiments of this invention relate to the field of electronic mechanical braking technologies, and in particular, to an electronic mechanical braking apparatus and a vehicle.

### BACKGROUND

Electro-Mechanical Braking System (Electro-Mechanical Braking System, EMB) is a braking system that uses a motor-driven mechanical structure to push a friction plate to clamp a brake disc to generate braking. One of factors that ensure whether the electro-mechanical braking system brakes a vehicle is whether the motor works normally, and if the motor does not work, the vehicle cannot be braked. Therefore, the electro-mechanical braking system integrates a set of backup braking mechanisms that are of a purely mechanical structure and that are connected to a pedal mechanism of the vehicle, so that when the motor cannot work, the electro-mechanical braking system brakes the vehicle by using a pedal braking force output by the pedal mechanism. However, when the electro-mechanical braking system brakes the vehicle by using the pedal braking force output by the pedal mechanism, the vehicle is prone to out-of-control actions such as drifting and tail throwing, which reduces driving safety of the vehicle. Therefore, how to ensure the driving safety of the vehicle becomes a problem to be urgently resolved. US 2022/348175 A1 discloses braking technologies, an electronic mechanical brake system, and a vehicle. US 2022/371561 A1 discloses a brake system for a motor vehicle. DE 10 2021 110474 A1 discloses a braking system for a vehicle with at least four brakeable wheels.

### SUMMARY

Embodiments of this invention provide an electronic mechanical braking apparatus and a vehicle. When a motor cannot work, the electronic mechanical braking apparatus can first brake front wheels of the vehicle and then brake rear wheels of the vehicle, so that out-of-control actions such as drifting and tail throwing can be avoided, thereby improving driving safety of the vehicle. The invention is defined in the appended claims.

A first aspect of this invention provides an electronic mechanical braking apparatus, configured to brake a vehicle. The electronic mechanical braking apparatus includes one time delay apparatus and two braking apparatuses, one braking apparatus is configured to brake front wheels of the vehicle, and the other braking apparatus is configured to brake rear wheels of the vehicle, and an operation mode of the electronic mechanical braking apparatus includes a primary braking mode and a secondary braking mode. When the electronic mechanical braking apparatus operates in the primary braking mode, the two braking apparatuses are separately configured to receive a motor braking force output by a braking motor. When the electronic mechanical braking apparatus operates in the secondary braking mode, the time delay apparatus is configured to: receive a pedal braking force output by a pedal mechanism of the vehicle, first transmit the braking force to the one braking apparatus, and then transmit the braking force to the other braking apparatus.

When the electronic mechanical braking apparatus in this embodiment of the invention cannot brake the front wheels and the rear wheels of the vehicle by using the motor braking force output by the braking motor, the electronic mechanical braking apparatus brakes the front wheels and the rear wheels of the vehicle by using the pedal braking force output by the pedal mechanism. In a process of braking the front wheels and the rear wheels by using the pedal braking force output by the pedal mechanism, when receiving the pedal braking force, the time delay apparatus first transmits the braking force to a braking apparatus for braking the front wheels, and then transmits the braking force to a braking apparatus for braking the rear wheels, so that the front wheels are braked earlier than the rear wheels. Therefore, the rear wheels are braked later than the front wheels and are locked, so that out-of-control actions such as tail throwing and drifting of the vehicle can be avoided, thereby improving driving safety of the vehicle.

In a possible implementation, at least one of the braking apparatuses includes two brakes and one balancing apparatus, and each brake is configured to brake one front wheel or one rear wheel. When the electronic mechanical braking apparatus operates in the primary braking mode, the two brakes are separately configured to receive the motor braking force output by the braking motor. When the electronic mechanical braking apparatus operates in the secondary braking mode, the balancing apparatus is configured to: receive the braking force transmitted by the time delay apparatus and separately transmit a same braking force to the two brakes.

In this way, one braking apparatus can brake two front wheels or two rear wheels with the same braking force, which can further improve reliability of the electronic mechanical braking apparatus and further avoid out-of-control actions such as drifting and tail throwing of the vehicle.

In a possible implementation, the balancing apparatus includes a lever member and a housing member. The housing member includes one input hole and two output holes, and the one input hole and the two output holes are respectively configured to communicate outside and inside of the housing member. The lever member is disposed inside the housing member, the lever member is configured to connect the time delay apparatus and the two brakes, and the braking force transmitted by the time delay apparatus is separately transmitted to the two brakes through the lever member at the same braking force.

In this way, it can be ensured that the lever member can always transmit the same braking force to the two brakes separately.

In a possible implementation, the time delay apparatus includes an outer housing member and a time delay member. The outer housing member is configured to fasten the time delay apparatus and is configured to accommodate the time delay member, the outer housing member includes an input opening and two output openings, and the input opening and the two output openings are respectively configured to communicate inside and outside of the outer housing member. The time delay member is configured to connect the other braking apparatus and the pedal mechanism. After the one braking apparatus first receives the braking force transmitted by the time delay apparatus, the pedal mechanism transmits the braking force to the other braking apparatus through the time delay member.

In this way, the time delay apparatus can be connected to two braking apparatuses separately, and one braking apparatus first receives the braking force transmitted by the time delay apparatus, and then the other braking apparatus receives the braking force transmitted by the time delay apparatus, so that the rear wheels are braked later than the front wheels.

In a possible implementation, the input opening is disposed on one side wall of the outer housing member, the two output openings are disposed on another side wall of the outer housing member, the one side wall of the outer housing member is disposed opposite to the another side wall of the outer housing member, and the time delay member is located between the one side wall of the outer housing member and the another side wall of the outer housing member. Alternatively, the input opening is disposed on one side wall of the outer housing member, the two output openings are respectively disposed on the other two side walls of the outer housing member, the other two side walls of the outer housing member are disposed opposite to each other and are respectively connected to one side wall of the outer housing member, and the time delay member is located between the other two side walls of the outer housing member.

In a possible implementation, the time delay apparatus includes one input steel rope and two output steel ropes. The input steel rope connects the pedal mechanism to one output steel rope and the time delay member separately through the input opening. The one output steel rope connects the pedal mechanism and the one braking apparatus through one output opening, and the pedal braking force output by the pedal mechanism is transmitted to the one braking apparatus through the input steel rope and the one output steel rope. The other output steel rope connects the time delay member and the other braking apparatus through the other output opening, and the pedal braking force output by the pedal mechanism is transmitted to the other braking apparatus through the input steel rope, the time delay member, and the other output steel rope.

In this way, costs of the time delay apparatus and difficulty in connecting the time delay apparatus to the pedal mechanism and the two braking apparatuses can be reduced on the premise that the braking force is first transmitted to one braking apparatus and then the braking force is transmitted to the other braking apparatus.

In a possible implementation, the time delay apparatus includes an outer housing member and a time delay member, the outer housing is configured to fasten the time delay apparatus, the time delay member is disposed inside the outer housing member, and the time delay member includes a driving member and a driven member; and the driving member is configured to transmit and connect to the pedal mechanism and the driven member, and the driven member is configured to connect to the other braking apparatus. When the time delay apparatus first transmits the braking force to the one braking apparatus, the driving member first moves towards the driven member in a first direction and then drives the driven member to move in the first direction, so that the time delay apparatus then transmits the braking force to the other braking apparatus.

The time delay member with such a structure is used, which helps reduce costs of the time delay member and a volume of the time delay apparatus on the premise that the rear wheels are braked later than the front wheels.

In a possible implementation, the driving member is further configured to transmit and connect the pedal mechanism and the one braking apparatus, the driving member is configured to: receive the pedal braking force output by the pedal mechanism, transmit the braking force to the one braking apparatus, and first move towards the driven member in the first direction and then drive the driven member to move in the first direction.

In a possible implementation, an axis of the driving member and an axis of the driven member are parallel to the first direction, and an end that is of the driving member and that faces the driven member is movably connected to an end that is of the driven member and that faces the driving member; and the driving member is configured to: receive the braking force output by the pedal mechanism and first move towards the driven member in the first direction and then drive the driven member to move in the first direction. Alternatively, the driving member is configured to: receive a restoring force output by the pedal mechanism and first move backwards the driven member in the first direction and then drive the driven member to move in the first direction, to restore displacement that is of the driving member and the driven member and that is relative to the outer housing member due to the pedal braking force.

In this way, it can be ensured that the time delay member is reused and that the rear wheels are braked later than the front wheels each time the vehicle is braked.

In a possible implementation, the one end that is of the driving member and that faces the driven member includes a time delay cavity with a connection opening facing the driven member, the one end that is of the driven member and that faces the driving member includes a time delay rod, the time delay rod may movably be disposed inside the time delay cavity through the connection opening, and an axis of the time delay rod is parallel to the first direction. Alternatively, the one end that is of the driving member and that faces the driven member includes a time delay rod, an axis of the time delay rod is parallel to the first direction, the one end that is of the driven member and that faces the driving member includes a time delay cavity with a connection opening facing the driven member, and the time delay rod may movably be disposed inside the time delay cavity through the connection opening.

In this way, one braking apparatus can receive the braking force first, and the other braking apparatus can receive the braking force later, so that the rear wheels are braked later than the front wheels.

In a possible implementation, the driving member and the driven member are separately slidably connected to the outer housing member, and sliding directions that are of the driving member and the driven member and that are relative to the outer housing member are parallel to the first direction.

In this way, positions of the driving member and the driven member can remain unchanged, which helps ensure that the driving member and the driven member are always movably connected.

In a possible implementation, the time delay apparatus includes one input gear member and two output gear members, and the input gear member and the two output gear members are separately disposed inside the outer housing member and are separately rotatably connected to the outer housing member. The input gear member is separately meshed with one output gear member and a driving rack of the driving member, the input gear member is configured to: receive the pedal braking force output by the pedal mechanism and rotate, so that the one output gear member rotates and the driving member moves towards the driven member in the first direction. The one output gear member is configured to connect to the one braking apparatus, and the pedal braking force output by the pedal mechanism is transmitted to the one braking apparatus through the input gear member and the one output gear member. The other output gear member is meshed with a driven rack of the driven member and is configured to connect to the other braking apparatus.

In this way, the time delay apparatus can be connected to the pedal mechanism and the two braking apparatuses separately, so that the rear wheels are braked later than the front wheels, thereby improving driving safety of the vehicle.

In a possible implementation, in the first direction, the two output gear members are respectively located on two sides of the input gear member, and the input gear member and the two output gear members are located on a same side of the time delay member. Alternatively, in the first direction, the two output gear members are respectively located on two sides of the input gear member, and the input gear member and the two output gear members are respectively located on two sides of the time delay member.

In this way, a volume of the time delay apparatus can be controlled, so that difficulty in arranging the time delay apparatus in the vehicle can be reduced.

In a possible implementation, the time delay apparatus includes one input steel rope and two output steel ropes. One end of the input steel rope is configured to connect to the pedal mechanism, and the other end of the input steel rope is configured to connect to the input gear member. One end of one output steel rope is configured to connect to the one output gear member, and the other end of the one output steel rope is configured to connect to the one braking apparatus. One end of the other output rope is configured to connect to the other output gear member, and the other end of the other output rope is configured to connect to the other braking apparatus.

In this way, costs of connecting the time delay apparatus to the pedal mechanism and the braking apparatus can be reduced on the premise that the pedal mechanism is connected to the input gear member and the braking apparatus is connected to the output gear member.

In a possible implementation, the input gear member includes an input shaft member and an input gear, two ends of the input shaft member are separately rotatably connected to the outer housing member, the input gear is sleeved on an outer wall of the input shaft member and is fastened to the input shaft member, the outer wall of the input shaft member includes at least two input fastening bases, the at least two input fastening bases are spaced apart around a circumferential direction of the input shaft member, each input fastening base includes an input fastening hole, and the other end of the input steel rope passes through the input fastening hole of each input fastening base and is fastened to each input fastening hole.

The input gear member with such a structure is used, so that the input gear member can be connected to the input steel rope, and the pedal braking force can drive the input gear member to rotate through the input steel rope.

In a possible implementation, the output gear member includes an output shaft member and an output gear, two ends of the output shaft member are separately rotatably connected to the outer housing member, the output gear is sleeved on an outer wall of the output shaft member and is fastened to the output shaft member, the outer wall of the output shaft member includes at least two output fastening bases, the at least two output fastening bases are spaced apart around a circumferential direction of the output shaft member, each output fastening base includes an output fastening hole, and the other end of the output steel rope passes through the output fastening hole of each output fastening base and is fastened to each output fastening hole.

The output gear member with such a structure is used, so that the output gear member can be connected to the output steel rope, and the output gear member rotates and the braking force can be transmitted to the braking apparatus through the output steel rope.

A second aspect of this invention provides a vehicle, including wheels, a pedal mechanism, and the electronic mechanical braking apparatus according to any one of the first aspect. A time delay apparatus of the electronic mechanical braking apparatus is connected to the pedal mechanism and is configured to brake the wheels. The vehicle is braked by the electronic mechanical braking apparatus with the time delay apparatus, so that out-of-control actions such as drifting and tail throwing caused when the front wheels of the vehicle are braked later than the rear wheels can be avoided.

### BRIEF DESCRIPTION OF DRAWINGS

FIG. 1 is a schematic diagram of a structure of a vehicle according to a comparative example, which is not covered by the claimed invention;
FIG. 2 is a schematic diagram of a structure of a first electronic mechanical braking apparatus according to an embodiment of the invention;
FIG. 3 is a schematic diagram of a structure of a braking apparatus according to an embodiment of the invention;
FIG. 4 is a sectional view of a balancing apparatus according to an embodiment of the invention;
FIG. 5 is a schematic diagram of a structure of a lever member according to an embodiment of the invention;
FIG. 6 is a front view of the lever member according to the embodiment shown in FIG. 5;
FIG. 7 is a sectional view at A-A in FIG. 6;
FIG. 8 is a partial exploded view of a time delay apparatus according to an embodiment of the invention;
FIG. 9 is a schematic diagram of a partial structure of the time delay apparatus according to the embodiment shown in FIG. 8;
FIG. 10 is a schematic diagram of a structure of a first time delay member according to an embodiment of the invention;
FIG. 11 is a schematic diagram of a structure of a driving member according to the embodiment shown in FIG. 10;
FIG. 12 is a schematic diagram of a structure of a driven member according to the embodiment shown in FIG. 10;
FIG. 13 is a schematic diagram of a structure of a second time delay member according to an embodiment of the invention;
FIG. 14 is a schematic diagram of a structure of a third time delay member according to an embodiment of the invention;
FIG. 15 is a schematic diagram of a structure of a fourth time delay member according to an embodiment of the invention;
FIG. 16 is a schematic diagram of a structure of an input shaft according to an embodiment of the invention;
FIG. 17 is a schematic diagram of a structure of an input shaft shoulder according to an embodiment of the invention;
FIG. 18 is a right view of an input shaft shoulder according to an embodiment of the invention;
FIG. 19 is a front view of an input shaft shoulder according to an embodiment of the invention;
FIG. 20 is a schematic diagram of a structure of an output shaft according to an embodiment of the invention;
FIG. 21 is a schematic diagram of a structure of an output shaft shoulder according to an embodiment of the invention;
FIG. 22 is a right view of an output shaft shoulder according to an embodiment of the invention; and
FIG. 23 is a front view of an output shaft shoulder according to an embodiment of the invention.

### Descriptions of reference numerals:

100: Electronic mechanical braking apparatus;
   10: Time delay apparatus;
      30: Outer housing member; 31: Input opening; 32: Output opening; 33: Bottom housing; 34: Cover;
      40: Time delay member;
         41: Driving member; 411: Driving rack; 4111: Driving tooth part; 412: Driving slider;
         42: Driven member; 421: Driven rack; 4211: Driven tooth part; 422: Driven slider;
         43: Time delay cavity; 431: Connection opening;
         44: Time delay rod; 441: Rod body part; 442: Pressing part;
         45: Time delay base; 451: Plate body part; 452: Connecting part;
         46: Sliding rod; 461: Sliding rod part; 462: Restriction part;
         471: Sliding part; 472: Sliding groove;
         481: Driving guide rail; 482: Driven guide rail;
      51: Input steel rope; 52: Output steel rope;
      60: Input gear member; 61: Input shaft member; 611: Input fastening base; 6111: Input lock hole; 6112: Input fastening hole; 612: Input shaft; 6121: Input spline part; 6122: Input shaft body part; 613: Input shaft shoulder; 614: Input interference part; 62: Input gear;
      70: Output gear member; 71: Output shaft member; 711: Output fastening base; 7111: Output lock hole; 7112: Output fastening hole; 712: Output shaft; 7121: Output spline part; 7122: Output shaft body; 713: Output shaft shoulder; 714: Output interference part; 72: Output gear;
   20: Braking apparatus;
      21: Brake;
      22: Balancing apparatus;
         23: Lever member; 231: Input connection cavity; 2311: Input through hole; 2312: Input through structure; 232: Output connection cavity; 2321: Output through hole; 2322: Output through structure;
         24: Housing member; 241: Input hole; 242: Output hole;
         25: Transfer steel rope; 251: Transfer steel rope head; 252: Transfer rope body part;
200: Vehicle;
   210: Pedal mechanism; 220: Front wheel; and 230: Rear wheel.

### DESCRIPTION OF EMBODIMENTS

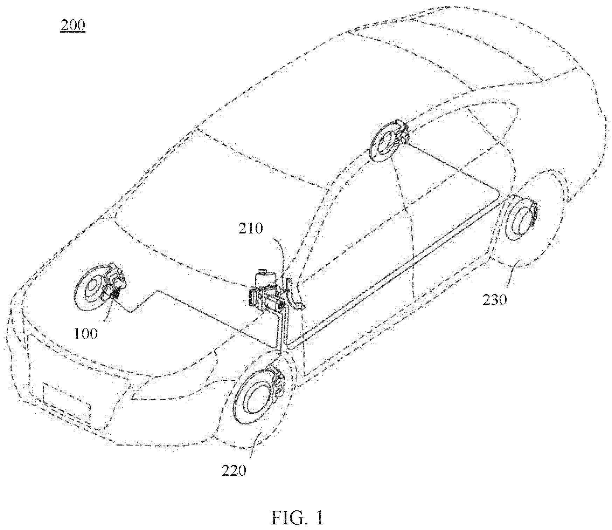

FIG. 1 is a comparative example, which is not covered by the claimed invention. As shown in FIG. 1, a vehicle 200 provided in this example may include wheels, a pedal mechanism 210, and an electronic mechanical braking apparatus 100. The electronic mechanical braking apparatus 100 is connected to the pedal mechanism 210 and the electronic mechanical braking apparatus 100 is configured to brake the wheels to implement braking of the vehicle 200. It may be understood that the wheels include a front wheel 220 and a rear wheel 230.

The vehicle 200 may be a two-wheeled vehicle, a tricycle, or an electric vehicle/electric vehicle (Electric Vehicle, EV), or may be a pure electric vehicle (Pure Electric Vehicle /Battery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), a new energy vehicle (New Energy Vehicle, NEV), and the like.

In this example, the electronic mechanical braking apparatus 100 may include two braking apparatuses 20. One braking apparatus 20 is configured to brake the front wheel 220 of the vehicle 200, and the other braking apparatus 20 is configured to brake the rear wheel 230 of the vehicle 200. An operation mode of the electronic mechanical braking apparatus 100 may include a primary braking mode and a secondary braking mode. When the electronic mechanical braking apparatus 100 operates in the primary braking mode, the two braking apparatuses 20 are separately configured to: receive a motor braking force output by a braking motor and respectively brake the front wheel 220 and the rear wheel 230. When the electronic mechanical braking apparatus 100 operates in the secondary braking mode, the two braking apparatuses 20 are respectively configured to: receive a pedal braking force output by the pedal mechanism 210 and respectively brake the front wheel 220 and the rear wheel 230.

It may be understood that the primary braking mode and the secondary braking mode are not simultaneously operated, the electronic mechanical braking apparatus 100 mainly operates in the primary braking mode, and only when the braking apparatus 20 cannot receive the motor braking force output by the braking motor, that is, the braking motor cannot work normally, the electronic mechanical braking apparatus 100 operates in the secondary braking mode. In other words, the secondary braking mode is equivalent to a backup braking mode of the electronic mechanical braking apparatus 100.

When the electronic mechanical braking apparatus 100 operates in the secondary braking mode, a sequence of braking the front wheel 220 and the rear wheel 230 affects driving safety of the vehicle 200. When the rear wheel 230 is first braked, and the front wheel 220 is then braked, the rear wheel 230 is locked earlier than the front wheel 220, which easily leads to out-of-control actions such as drifting and tail throwing of the vehicle 200. Therefore, a sequence in which the two braking apparatuses 20 brake the front wheel 220 and the rear wheel 230 determine the sequence in which the front wheel 220 and the rear wheel 230 are braked, thereby affecting the driving safety of the vehicle 200. Correspondingly, how to ensure the driving safety of the vehicle 200 becomes a problem to be urgently resolved.

In view of this, embodiments of this application provide the electronic mechanical braking apparatus 100 and the vehicle 200.

When the electronic mechanical braking apparatus 100 in embodiments of this invention operates in the secondary braking mode, the rear wheel 230 may be first braked, and the front wheel 220 may then be braked, so that the rear wheel 230 is locked not earlier than the front wheel 220, thereby improving the driving safety of the vehicle 200. Further, safety of personnel in the vehicle 200 can be improved.

The following describes a structure of the electronic mechanical braking apparatus 100 provided in embodiments of this invention with reference to accompanying drawings.

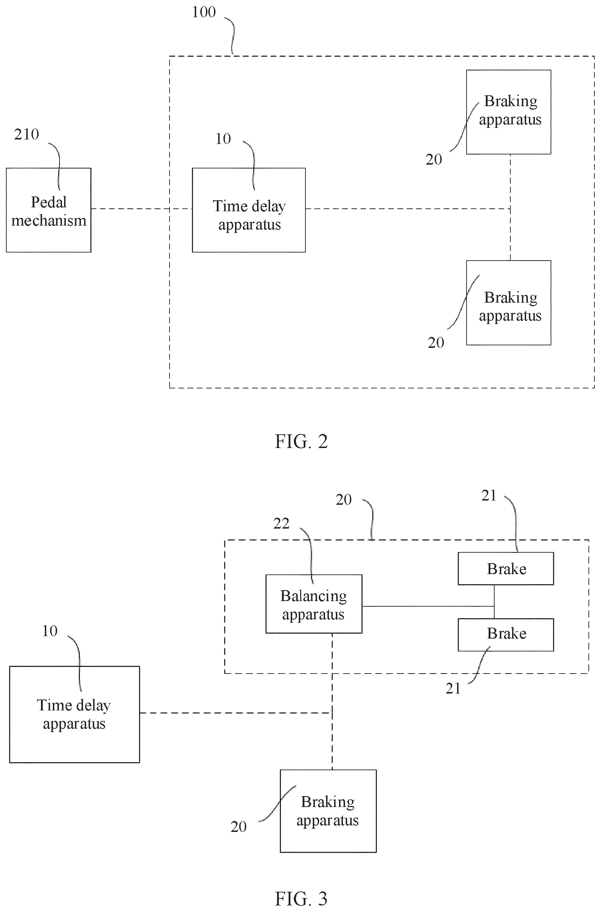

FIG. 2 is a schematic diagram of a structure of a first electronic mechanical braking apparatus according to an embodiment of the invention. Refer to FIG. 2. An electronic mechanical braking apparatus 100 in this embodiment of the invention includes a time delay apparatus 10 and two braking apparatuses 20. One braking apparatus 20 is configured to brake a front wheel 220 of a vehicle 200, and the other braking apparatus 20 is configured to brake a rear wheel 230 of the vehicle 200. An operation mode of the electronic mechanical braking apparatus 100 includes a primary braking mode and a secondary braking mode. When the electronic mechanical braking apparatus 100 operates in the primary braking mode, the two braking apparatuses 20 are separately configured to receive a motor braking force output by a braking motor, so that one braking apparatus 20 brakes the front wheel 220 and the other braking apparatus 20 brakes the rear wheel 230. When the electronic mechanical braking apparatus 100 operates in the secondary braking mode, the time delay apparatus 10 is configured to: receive a pedal braking force output by a pedal mechanism 210 of the vehicle 200, first transmit the braking force to one braking apparatus 20, and then transmit the braking force to the other braking apparatus 20, so that one braking apparatus 20 first brakes the front wheel 220 and then the other braking apparatus 20 brakes the rear wheel 230, and the rear wheel 230 is braked and locked later than the front wheel 220.

It may be understood that when the braking motor cannot work normally, that is, the braking motor cannot output the motor braking force, the time delay apparatus 10 receives the pedal braking force output by the pedal mechanism 210, first transmits the braking force to the braking apparatus 20 for braking the front wheel 220, and then transmits the braking force to the braking apparatus 20 for braking the rear wheel 230, so that the front wheel 220 is braked earlier than the rear wheel 230 and out-of-control actions such as tail throwing and drifting can be avoided in the vehicle 200, thereby improving driving safety of the vehicle 200.

It should be noted that, when the electronic mechanical braking apparatus 100 operates in the primary braking mode, the two braking apparatuses 20 may simultaneously brake the front wheel 220 and the rear wheel 230, or one braking apparatus 20 first brakes the front wheel 220 and then the other braking apparatus 20 brakes the rear wheel 230. One of manners in which the front wheel 220 is first braked and the rear wheel 230 is then braked is to control a sequence in which the two braking apparatuses 20 receive the motor braking force.

Refer to FIG. 1. A quantity of front wheels 220 and a quantity of rear wheels 230 are two each. Therefore, in this embodiment of the invention, one braking apparatus 20 is configured to brake the two front wheels 220, and the other braking apparatus 20 is configured to brake the two rear wheels 230. It can be learned that the quantity of front wheels 220 and the quantity of rear wheels 230 are the same. Certainly, in addition to being two, in some embodiments, the quantity of front wheels 220 and the quantity of rear wheels 230 may be one each, so that one braking apparatus 20 is configured to brake one front wheel 220 and the other braking apparatus 20 is configured to brake one rear wheel 230. In addition to being the same, the quantity of front wheels 220 and the quantity of rear wheels 230 may be different. For example, in some embodiments, there may be one front wheel 220 and two rear wheels 230, so that one braking apparatus 20 is configured to brake one front wheel 220 and the other braking apparatus 20 is configured to brake two rear wheels 230.

It should be noted that, when the quantity of front wheels 220 or rear wheels 230 is an even number greater than two, a quantity of braking apparatuses 20 for braking the front wheels 220 or the rear wheels 230 may be equal to the quantity of front wheels 220 or rear wheels 230 divided by two.

In some possible implementations, the braking apparatus 20 for braking one front wheel 220 or one rear wheel 230 may include a friction plate (not shown in the figure) and a transmission member (not shown in the figure). The transmission member is configured to transmit and connect the friction plate and the time delay apparatus 10 and the braking motor separately. When the electronic mechanical braking apparatus 100 operates in the primary braking mode, the braking motor may drive, through the transmission member, the friction plate to move towards a brake disc in an axial direction of the brake disc of the front wheel 220 or the rear wheel 230, so that the friction plate clamps the brake disc and implements braking. When the electronic mechanical braking apparatus 100 operates in the secondary braking mode, the transmission member is configured to: receive the braking force transmitted by the time delay apparatus 10 and drive the friction plate to move towards the brake disc in the axial direction of the brake disc of the front wheel 220 or the rear wheel 230, so that the friction plate clamps the brake disc and implements braking.

FIG. 3 is a schematic diagram of a structure of a braking apparatus according to an embodiment of the invention. In a possible implementation, as shown in FIG. 3, a braking apparatus 20 may include two brakes 21 and one balancing apparatus 22. Each brake 21 is configured to brake one front wheel 220 or one rear wheel 230. When an electronic mechanical braking apparatus 100 operates in a primary braking mode, the two brakes 21 are separately configured to receive a motor braking force output by a braking motor, so that two front wheels 220 or two rear wheels 230 can be braked. When the electronic mechanical braking apparatus 100 operates in a secondary braking mode, the balancing apparatus 22 is configured to: receive a braking force transmitted by a time delay apparatus 10 and separately transmit a same braking force to the two brakes 21, so that the two front wheels 220 or the two rear wheels 230 can be braked. The balancing apparatus 22 receives the braking force transmitted by the time delay apparatus 10 and separately transmits the same braking force to the two brakes 21, so that different braking forces for braking the two front wheels 220 or the two rear wheels 230 can be avoided and out-of-control actions such as drifting and tail throwing of a vehicle 200 can be further avoided, thereby improving driving safety of the vehicle 200.

In this embodiment of the invention, a specific structure of the brake 21 is not limited herein. For example, in some possible implementations, the brake 21 may include a friction plate (not shown in the figure) and a clamp body member (not shown in the figure). The clamp body member may include a transmission part and a fastening part. The fastening part is connected to a vehicle body of the vehicle 200, so that the brake 21 is fastened to the vehicle 200. The transmission part is configured to transmit and connect the friction plate and the braking motor (not shown in the figure) and the balancing apparatus 22 separately. When the electronic mechanical braking apparatus 100 operates in the primary braking mode, the braking motor drives, through the transmission part, the friction plate to move in an axial direction of the front wheel 220 or the rear wheel 230, so that the friction plate can clamp a brake disc of the front wheel 220 or the rear wheel 230. When the electronic mechanical braking apparatus 100 operates in the secondary braking mode, the balancing apparatus 22 receives the braking force transmitted by the time delay apparatus 10 and drives, through the transmission part, the friction plate to move in the axial direction of the front wheel 220 or the rear wheel 230, so that the friction plate can clamp the brake disc of the front wheel 220 or the rear wheel 230.

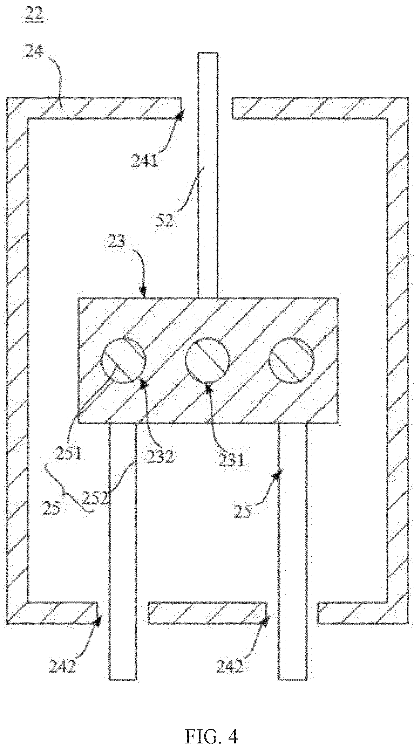

In this embodiment of the invention, a specific structure of the balancing apparatus 22 is not limited. FIG. 4 is a sectional view of a balancing apparatus according to an embodiment of the invention. For example, in some possible implementations, as shown in FIG. 4, a balancing apparatus 22 may include a lever member 23 and a housing member 24. The lever member 23 is disposed inside the housing member 24, and the lever member 23 is configured to connect a time delay apparatus 10 and two brakes 21 separately. A braking force transmitted by the time delay apparatus 10 may be separately transmitted to the two brakes 21 through the lever member 23 at a same braking force, so that the two brakes 21 brake two front wheels 220 or two rear wheels 230 with the same braking force. In addition, the lever member 23 is disposed inside the housing member 24, so that impact of a foreign object that is outside the housing member 24 and that is on normal working of the lever member 23 can be avoided and it is ensured that the balancing apparatus 22 can separately transmit the same braking force to the two brakes 21.

The housing member 24 is connected to a vehicle body of a vehicle 200, to fasten the balancing apparatus 22 to the vehicle body. The housing member 24 may include an input hole 241 and two output holes 242, and the input hole 241 and the two output holes 242 are respectively configured to communicate inside and outside of the housing member 24. The lever member 23 may be connected to the time delay apparatus 10 through the input hole 241, and the lever member 23 may be separately connected to the two brakes 21 through the two output holes 242. The braking force transmitted by the time delay apparatus 10 may be separately transmitted to the two brakes 21 through the lever member 23 at the same braking force, so that each brake 21 brakes one wheel with the same braking force, which helps improve reliability of the electronic mechanical braking apparatus 100.

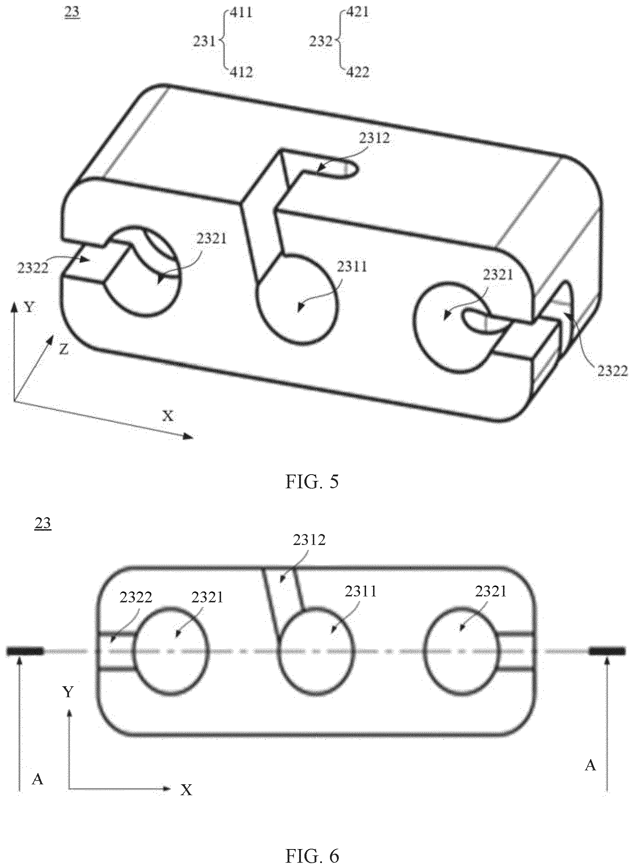

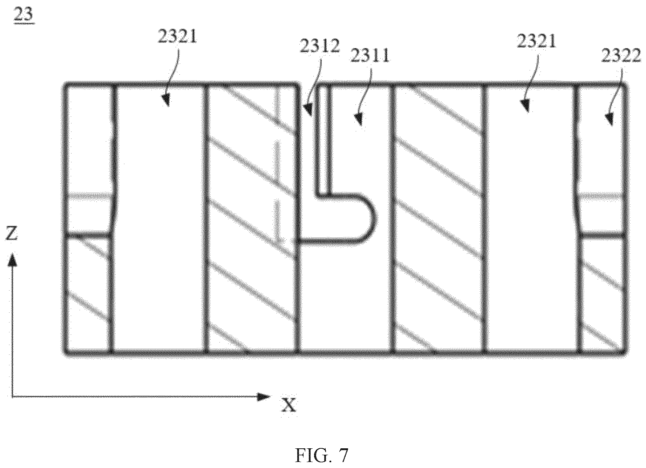

In this embodiment of the invention, a specific structure of the lever member 23 is not limited. FIG. 5 is a schematic diagram of a structure of a lever member according to an embodiment of the invention, FIG. 6 is a front view of the lever member according to the embodiment shown in FIG. 5, and FIG. 7 is a sectional view at A-A in FIG. 6. For example, in some embodiments, as shown in FIG. 4 and FIG. 5, the lever member 23 may include one input connection cavity 231 and two output connection cavities 232. The input connection cavity 231 is configured to connect to the time delay apparatus 10, and the two output connection cavities 232 are respectively configured to connect to the two brakes 21. The two output connection cavities 232 are respectively arranged on two sides of the input connection cavity 231 in an axial direction (an X direction in FIG. 5) of the lever member 23. A distance between the input connection cavity 231 and one output connection cavity 232 is equal to a distance between the input connection cavity 231 and the other output connection cavity 232. In this way, it can be ensured that the braking forces transmitted by the lever member 23 to the two brakes 21 are the same in terms of magnitude, and that the lever member 23 is separately connected to the time delay apparatus 10 and the two brakes 21.

It may be understood that, by using a lever principle: F1 * L1 = F2 * L2, it can be ensured that the braking forces transmitted by the lever member 23 to the two brakes 21 are the same in terms of magnitude. F1 and F2 are braking forces separately transmitted by the lever member 23 to the two brakes 21, L1 is the distance between the input connection cavity 231 and one output connection cavity 232, and L2 is the distance between the input connection cavity 231 and the other output connection cavity 232.

The input connection cavity 231 is connected to the time delay apparatus 10, which helps reduce difficulty in connecting the lever member 23 to the time delay apparatus 10 on the premise that the lever principle is satisfied. Similarly, the output connection cavity 232 is connected to the brake 21, which helps reduce difficulty in connecting the lever member 23 to the brake 21 on the premise that the lever principle is satisfied.

In this embodiment of the invention, a specific structure of the input connection cavity 231 is not limited. For example, in some possible implementations, as shown in FIG. 5 to FIG. 7, the input connection cavity 231 may include an input through hole 2311. The input through hole 2311 is located on a top wall of the lever member 23 and penetrates the lever member 23 in a direction perpendicular to the axis of the lever member 23 (a Z direction in FIG. 5), and an inner wall of the input through hole 2311 includes an input through structure 2312. The input through structure 2312 penetrates one side wall of the lever member 23 in a direction perpendicular to the axis of the lever member 23 (a Y direction in FIG. 5). A first direction and the axis of the lever member 23 are perpendicular to each other, and a second direction and the axis of the lever member 23 are perpendicular to each other.

In this embodiment of the invention, a specific structure of the input through structure 2312 is not specifically limited. For example, in some embodiments, as shown in FIG. 5, the input through structure 2312 may be a ring-shaped input port with a notch. A specific shape of the ring-shaped input port is not limited herein. For example, as shown in FIG. 7, the ring-shaped input port has an L-shaped longitudinal section in the first direction. Certainly, in addition to being the ring-shaped input port with a notch, the input through structure 2312 may alternatively be a ring-shaped input hole 241 in some embodiments. A specific structure of the ring-shaped input hole 241 is not limited herein. For example, the ring-shaped input hole 241 may be a circular hole.

In this embodiment of the invention, a specific structure of the output connection cavity 232 is not specifically limited. In some possible implementations, as shown in FIG. 5 to FIG. 7, each output connection cavity 232 may include one output through hole 2321. The output through hole 2321 is located on the top wall of the lever member 23 and penetrates the lever member 23 in the direction perpendicular to the axis of the lever member 23 (the Z direction in FIG. 5), and an axis of the output through hole 2321 is parallel to an axis of the input through hole 2311. An inner wall of each output through hole 2321 includes an output through structure 2322, and two output through structures 2322 respectively penetrate the other two side walls of the lever member 23.

In this embodiment of the invention, a specific structure of the output through structure 2322 is specifically limited. For example, in some embodiments, as shown in FIG. 5, the output through structure 2322 may be a ring-shaped output port with a notch. A specific shape of the ring-shaped output port is not limited herein. For example, as shown in FIG. 5, the ring-shaped output port is L-shaped. Certainly, in addition to being the ring-shaped output port with a notch, the output through structure 2322 may alternatively be a ring-shaped output hole in some embodiments. A specific structure of the ring-shaped output hole is not limited herein. For example, the ring-shaped output hole may be a circular hole.

In this embodiment of the invention, a connection structure between the lever member 23 and the two brakes 21 is not limited. For example, in some embodiments, still as shown in FIG. 5, the balancing apparatus 22 may further include two transfer steel ropes 25, and one end of each transfer steel rope 25 is movably connected to one output connection cavity 232 through one output hole 242, and the other end of each transfer steel rope 25 is connected to one brake 21.

A specific structure of the transfer steel rope 25 is not limited herein. For example, in some embodiments, still as shown in FIG. 5, each transfer steel rope 25 may include a transfer steel rope head 251 and a transfer rope body part 252. The transfer steel rope head 251 is of a rod-shaped structure and may movably be disposed in the output through hole 2321. An axis of the transfer steel rope head 251 is parallel to the axis of the output through hole 2321. One end of the transfer rope body part 252 is fastened to a middle part of the transfer steel rope head 251, and the other end of the transfer rope body part 252 is connected to the brake 21. The transfer rope body part 252 may movably penetrate the output through structure 2322.

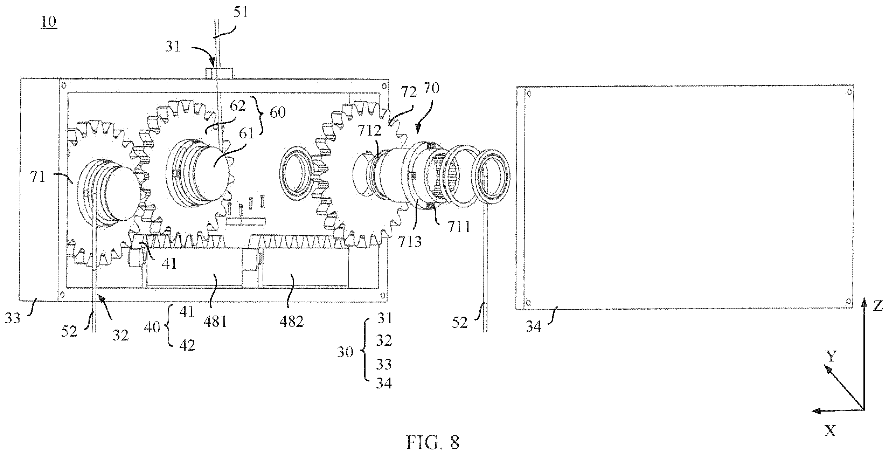

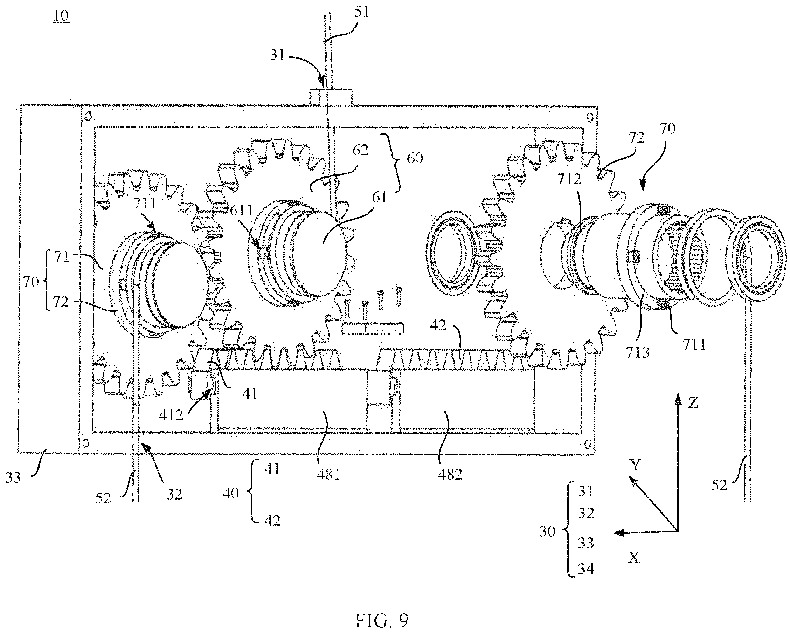

FIG. 8 is a partial exploded view of a time delay apparatus according to an embodiment of the invention, and FIG. 9 is a schematic diagram of a partial structure of the time delay apparatus according to the embodiment shown in FIG. 8. In a possible implementation, as shown in FIG. 8 and FIG. 9, a time delay apparatus 10 in this embodiment of the invention may include an outer housing member 30 and a time delay member 40. The outer housing member 30 is configured to fasten the time delay apparatus 10 and is configured to accommodate the time delay member 40. The outer housing member 30 includes an input opening 31 and two output openings 32, and the input opening 31 and the two output openings 32 are respectively configured to communicate inside and outside of the outer housing member 30. The time delay member 40 is configured to connect the other braking apparatus 20 and a pedal mechanism 210. After one braking apparatus 20 first receives a braking force transmitted by the time delay apparatus 10, the pedal mechanism 210 transmits the braking force to the other braking apparatus 20 through the time delay member 40. The time delay member 40 is used, so that a rear wheel 230 can be braked and locked later than a front wheel 220, thereby improving driving safety of a vehicle 200.

It may be understood that there is a cavity inside the outer housing member 30, and an inner wall of the cavity includes the input opening 31 and the output opening 32. The time delay member 40 is disposed in the cavity, so that impact of external foreign objects such as water and dust on normal working of the time delay member 40 can be avoided and further, it can be ensured that the rear wheel 230 is braked and locked later than the front wheel 220.

In this embodiment of the invention, a specific structure of the outer housing member 30 is not limited. For example, in some embodiments, as shown in FIG. 8, the outer housing member 30 may include a bottom housing 33 and a cover 34. The cover 34 covers the bottom housing 33 and defines, together with the bottom housing 33, the cavity for accommodating the time delay member 40. The input opening 31 and the output opening 32 may be disposed on the bottom housing 33.

In some possible implementations, as shown in FIG. 8, the input opening 31 may be disposed on one side wall of the outer housing member 30, and the two output openings 32 may be disposed on another side wall of the outer housing member 30. The one side wall of the outer housing member 30 is disposed opposite to the another side wall of the outer housing member 30, and the time delay member 40 is located between the one side wall of the outer housing member 30 and the another side wall of the outer housing member 30. In this way, it can be ensured that the time delay member 40 can be connected to the two braking apparatuses 20 and that the time delay member 40 can receive a pedal braking force transmitted by the pedal mechanism 210.

Certainly, in addition to being disposed on the two opposite side walls of the housing member 30, in some possible implementations, the input opening 31 may alternatively be disposed on one side wall of the outer housing member 30, the two output openings 32 may alternatively be disposed on the other two side walls of the outer housing member 30 respectively, the other two side walls of the outer housing member 30 are disposed opposite to each other and are respectively connected to one side wall of the outer housing member 30, and the time delay member 40 is located between the other two side walls of the outer housing member 30. In this way, a direction of a steel rope connecting the time delay apparatus 10 and the braking apparatus 20 can be controlled, which helps reduce difficulty in connecting the time delay apparatus 10 and the two brake braking apparatuses 20.

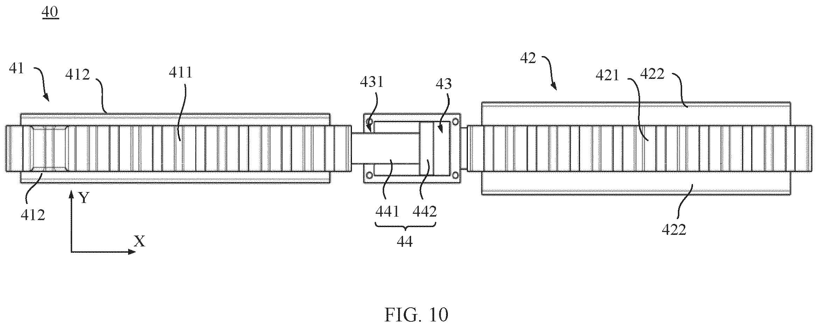

FIG. 10 is a schematic diagram of a structure of a first time delay member according to an embodiment of the invention. In some possible implementations, as shown in FIG. 9 and FIG. 10, the time delay member 40 in this embodiment of the invention may include a driving member 41 and a driven member 42. The driving member 41 is configured to transmit and connect to the pedal mechanism 210 and the driven member 42, and the driven member 42 is configured to connect to the other braking apparatus 20. When the time delay apparatus 10 first transmits the braking force to the one braking apparatus 20, the driving member 41 first moves towards the driven member 42 in a first direction (an X direction in FIG. 9 or FIG. 10) and then drives the driven member 42 to move in the first direction (the X direction in FIG. 9 or FIG. 10), so that the time delay apparatus 10 then transmits the braking force to the other braking apparatus 20. The time delay member 40 with such a structure is used, which helps reduce costs of the time delay member 40 and a volume of the time delay apparatus 10 on the premise that the rear wheel 230 is braked later than the front wheel 220.

It may be understood that, when the time delay apparatus 10 transmits the braking force to the braking apparatus 20 for braking the front wheel 220, the driving member 41 simultaneously moves to the right, and the driving member 41 actively drives the driven member 42 to move to the right after a period of time. Therefore, the driving member 41 can receive the pedal braking force output by the pedal mechanism 210 and transmit the braking force to the braking apparatus 20 for braking the rear wheel 230 through the driven member 42, thereby ensuring that the front wheel 220 is braked earlier than the rear wheel 230.

It should be noted that, in addition to being configured to connect to the pedal mechanism 210 and the braking apparatus 20 for braking the rear wheel 230, in some possible implementations, the time delay member 40 may alternatively be configured to enable the pedal mechanism 210 to be separately connected to the two braking apparatuses 20. In other words, through the time delay member 40, the pedal braking force output by the pedal mechanism 210 is first transmitted to the braking apparatus 20 for braking the front wheel 220 and is then transmitted to the braking apparatus 20 for braking the rear wheel 230. Because the time delay member 40 may include the driving member 41 and the driven member 42, a first end of the driving member 41 is connected to the pedal mechanism 210, a second end of the driving member 41 is connected to the braking apparatus 20 for braking the front wheel 220, and the second end of the driving member 41 is connected to the driven member 42. The driving member 41 is configured to: receive the braking force output by the pedal mechanism 210, transmit the braking force to the one braking apparatus 20, and first move towards the driven member 42 in the first direction and then drive the driven member 42 to move in the first direction.

In some possible implementations, an axis of the driving member 41 and an axis of the driven member 42 are parallel to the first direction (the X direction in FIG. 10), and an end that is of the driving member 41 and that faces the driven member 42 is movably connected to an end that is of the driven member 42 and that faces the driving member 41. The driving member 41 is configured to: receive the braking force output by the pedal mechanism 210 and first move towards the driven member 42 in the first direction and then drive the driven member 42 to move in the first direction. Alternatively, the driving member 41 is configured to: receive a restoring force output by the pedal mechanism 210 and first move backwards the driven member 42 in the first direction and then drive the driven member 42 to move, to restore displacement that is of the driving member 41 and the driven member 42 and that is relative to the outer housing member 30 due to the pedal braking force. In this way, it can be ensured that the time delay member 40 is reused and further, that the rear wheel 230 is braked later than the front wheel 220 each time the vehicle 200 is braked.

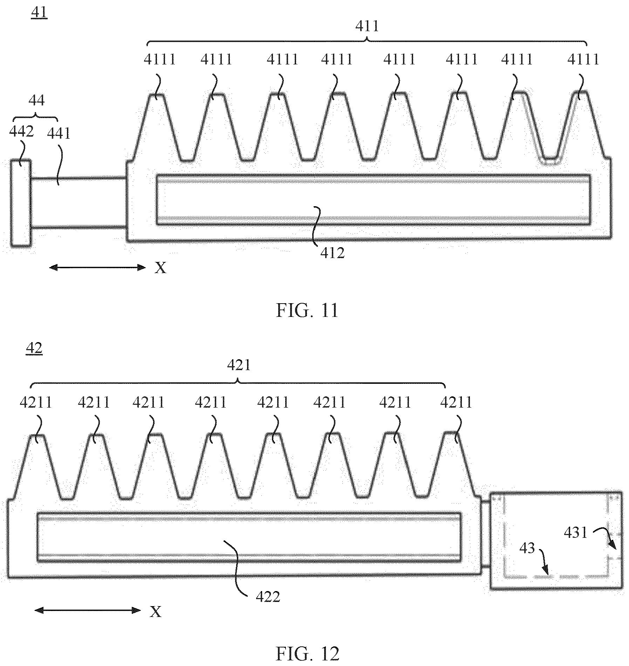

In this embodiment of the invention, a specific structure in which the driving member 41 and the driven member 42 are movably connected is not limited. FIG. 11 is a schematic diagram of a structure of the driving member according to the embodiment shown in FIG. 10, and FIG. 12 is a schematic diagram of a structure of the driven member according to the embodiment shown in FIG. 10. For example, in some embodiments, as shown in FIG. 10 to FIG. 12, the one end that is of the driving member 41 and that faces the driven member 42 includes a time delay cavity 43 with a connection opening 431 facing the driven member 42, the one end that is of the driven member 42 and that faces the driving member 41 includes a time delay rod 44, the time delay rod 44 may movably be disposed inside the time delay cavity 43 through the connection opening 431, and an axis of the time delay rod 44 is parallel to the first direction.

After the driving member 41 receives the pedal braking force, as shown in FIG. 9 and FIG. 10, the time delay rod 44 first moves to the right in the time delay cavity 43 for a distance until the time delay rod 44 presses against an inner wall of the time delay cavity 43, and then the time delay rod 44 pushes the driven member 42 to move in the first direction, to transmit the braking force to the braking apparatus 20 for braking the rear wheel 230.

After the driving member 41 receives the restoring force, as shown in FIG. 9 and FIG. 10, the time delay rod 44 first moves to the left in the time delay cavity 43 for a distance until the time delay rod 44 presses against an inner wall of the connection opening 431, then the time delay rod 44 drives the driven member 42 to move to the left in the first direction, and the driving member 41 and the driven member 42 can return to initial positions.

In this embodiment of the invention, a specific structure of the time delay rod 44 is not limited. Refer to FIG. 10 and FIG. 11. The time delay rod 44 may include a rod body part 441 and a pressing part 442. The rod body part 441 penetrates the connection opening 431, and one end that is of the rod body part 441 and that is located in the time delay cavity 43 is fastened to the pressing part 442. A size of the pressing part 442 is greater than a size of the connection opening 431, to ensure that the pressing part 442 is always located in the time delay cavity 43. The pressing part 442 is configured to press against the inner wall of the time delay cavity 43, so that the time delay rod 44 can push the driven member 42 to move to the right in the first direction or drive the driven member 42 to move to the left.

It may be understood that positions of disposing the time delay rod 44 and the time delay cavity 43 may also be interchangeable. For example, in some embodiments, the one end that is of the driving member 41 and that faces the driven member 42 includes the time delay rod 44, the axis of the time delay rod 44 is parallel to the first direction, the one end that is of the driven member 42 and that faces the driving member 41 includes the time delay cavity 43 with the connection opening 431 facing the driven member 42, and the time delay rod 44 may movably be disposed inside the time delay cavity 43 through the connection opening 431.

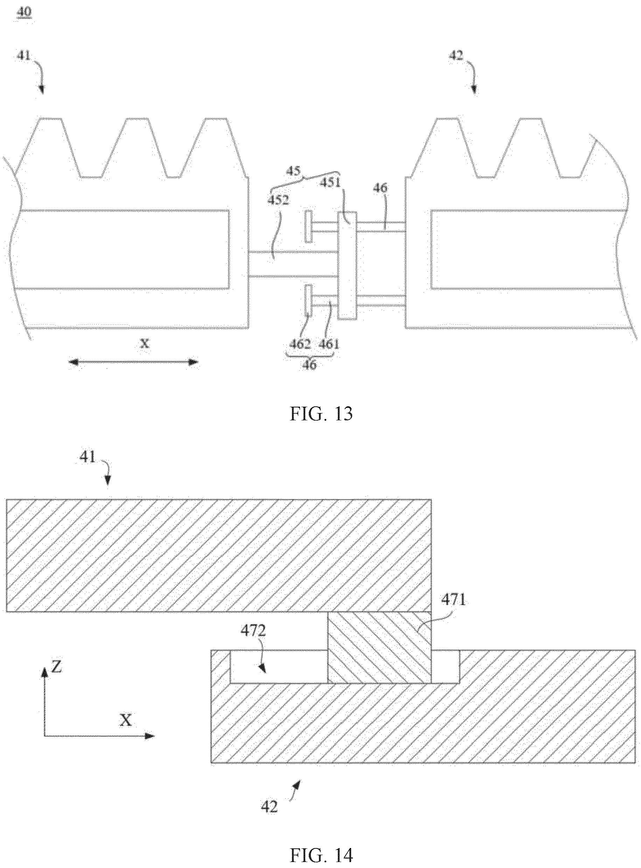

The driving member 41 and the driven member 42 are movably connected through the time delay rod 44 and the time delay cavity 43, and in addition to this, FIG. 13 is a schematic diagram of a structure of a second time delay member according to an embodiment of the invention. In some embodiments, as shown in FIG. 13, an end that is of a driving member 41 and that faces a driven member 42 may alternatively include a time delay base 45, and an end that is of the driven member 42 and that faces the driving member 41 may alternatively include two sliding rods 46. The time delay base 45 includes a plate body part 451 and a connecting part 452. An end that is of the connecting part 452 and that faces the driven member 42 is fastened to the plate body part 451. The plate body part 451 includes two sliding holes spaced apart around a circumferential direction of the connecting part 452. Each sliding rod 46 may include a sliding rod part 461 and a restriction part 462. An end that is of the sliding rod part 461 and that faces the driving member 41 is fastened to the restriction part 462, and the sliding rod part 461 may movably penetrate inside the sliding hole. The plate body part 451 is located between the restriction part 462 and the other end of the sliding rod part 461.

After the driving member 41 receives a pedal braking force, as shown in FIG. 13, the plate body part 451 moves to the right for a distance until the plate body part 451 presses against the driven member 42, and then the plate body part 451 pushes the driven member 42 to the right in a first direction, to transmit the braking force to a braking apparatus 20 for braking a rear wheel 230.

After the driving member 41 receives a restoring force, as shown in FIG. 13, the plate body part 451 moves to the left for a distance until the plate body part 451 presses against the restriction part 462, then the plate body part 451 drives the driven member 42 to move to the left in the first direction, and the driving member 41 and the driven member 42 can return to initial positions.

It may be understood that positions of arranging the time delay base 45 and the sliding rod 46 may also be interchangeable. For example, in some embodiments, the time delay base 45 may alternatively be disposed on the driven member 42, and the sliding rod 46 may alternatively be disposed on the driving member 41.

FIG. 14 is a schematic diagram of a structure of a third time delay member according to an embodiment of the invention. In some embodiments, as shown in FIG. 14, a driving member 41 and a driven member 42 may alternatively be spaced apart in a height direction (for example, a Z direction in FIG. 14) of a time delay apparatus 10. An axis of the driving member 41 and an axis of the driven member 42 are parallel to a first direction (for example, an X direction in FIG. 14), one end of the driving member 41 includes a sliding part 471, and one end of the driven member 42 includes a sliding groove 472 extending in the first direction. A part of the sliding part 471 is inserted into the sliding groove 472. When the sliding part 471 presses against a right side wall that is of the sliding groove 472 and that is in the first direction, the driving member 41 can drive the driven member 42 to move to the right. When the sliding part 471 presses against a left side wall that is of the sliding groove 472 and that is in the first direction, the driving member 41 can drive the driven member 42 to move to the left.

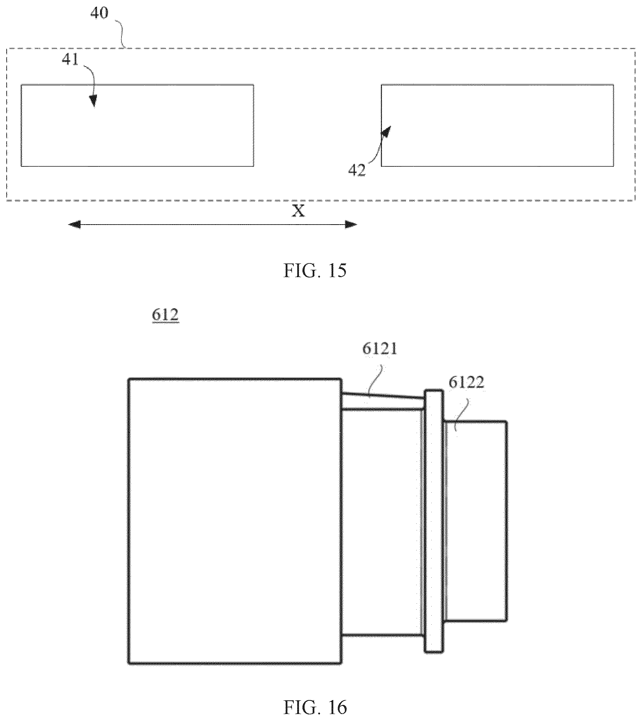

FIG. 15 is a schematic diagram of a structure of a fourth time delay member according to an embodiment of the invention. In some embodiments, a driving member 41 and a driven member 42 may not be connected. For example, as shown in FIG. 15, the driving member 41 and the driven member 42 are disposed side by side and are spaced apart in a first direction, and an axis of the driving member 41 and an axis of the driven member 42 are parallel to the first direction. The driving member 41 is configured to: receive a braking force output by a pedal mechanism 210 and first move towards the driven member 42 in the first direction (for example, an X direction in FIG. 15) and then drive the driven member 42 to move in the first direction. Alternatively, the driving member 41 is configured to: receive a restoring force output by the pedal mechanism and first move backwards the driven member 42 in the first direction, to restore displacement that is of the driving member 41 and that is relative to an outer housing member 30 due to the pedal braking force. An elastic member (not shown in the figure) is disposed between the driven member 42 and the outer housing member 30, and the elastic member is configured to restore displacement that is of the driven member 42 and that is relative to the outer housing member 30 due to the driving member 41.

It may be understood that, because there is a gap between the driving member 41 and the driven member 42 in the first direction, the driven member 42 does not move at the same time when the driving member 41 starts to move in the first direction. In this way, it can be ensured that the driven member 42 starts to move later than the driving member 41.

In some possible implementations, the driving member 41 and the driven member 42 may be separately slidably connected to the outer housing member 30, and sliding directions that are of the driving member 41 and the driven member 42 and that are relative to the outer housing member 30 are parallel to the first direction. In this way, positions of the driving member 41 and the driven member 42 can remain unchanged, which helps ensure that the driving member 41 and the driven member 42 are always movably connected.

In this embodiment of the invention, a structure in which the driving member 41 and the outer housing member 30 are slidably connected is not limited. For example, in some embodiments, as shown in FIG. 9 and FIG. 10, the driving member 41 may include two driving sliders 412 disposed opposite to each other in a direction (for example, a Y direction in FIG. 10) perpendicular to the first direction (for example, the X direction in FIG. 10). One side wall of the outer housing member 30 includes a driving sliding groove for insertion of one driving slider 412. Inside of the outer housing member 30 may include a driving guide rail 481 whose axis is parallel to the first direction, and the driving guide rail 481 includes a driving sliding groove for insertion of the other driving slider 412. The driving member 41 is located between a side wall at one end of the outer housing member 30 and the driving guide rail 481. The structure is used, which helps improve stability of the slidable connection between the driving member 41 and the outer housing member 30. In addition, the driving guide rail 481 is connected to the other driving slider 412, so that difficulty in assembling the driving member 41 and the outer housing member 30 can be reduced.

In this embodiment of the invention, a specific structure of the driving slider 412 is not limited. In addition, a structure of the driving sliding groove may be determined based on the driving slider 412. For example, in some embodiments, still as shown in FIG. 9 and FIG. 10, the driving slider 412 is of a rectangular plate structure, and correspondingly, the driving sliding groove may be a rectangular sliding groove.

It should be noted that, in some embodiments, the driving guide rail 481 may be removed from the outer housing member 30, and another side wall of the outer housing member 30 includes the driving sliding groove for insertion of the other driving slider 412.

In this embodiment of the invention, a structure in which the driven member 42 and the outer housing member 30 are slidably connected is not limited. For example, in some embodiments, the driven member 42 may include two driven sliders 422 disposed opposite to each other in a direction (for example, the Y direction in FIG. 10) perpendicular to the first direction (for example, the X direction in FIG. 10). One side wall of the outer housing member 30 includes a driven sliding groove for insertion of one driven slider 422. The inside of the outer housing member 30 may include a driven guide rail 482 whose axis is parallel to the first direction, and the driven guide rail 482 includes a driven sliding groove for insertion of the other driven slider 422. The driven member 42 is located between the side wall at one end of the outer housing member 30 and the driven guide rail 482. The disposition helps improve stability of the slidable connection between the driven member 42 and the outer housing member 30. In addition, the driven guide rail 482 is connected to the other driven slider 422, so that difficulty in assembling the driven member 42 and the outer housing member 30 can be reduced.

In this embodiment of the invention, a specific structure of the driven slider 422 is not limited. In addition, a structure of the driven sliding groove may be determined based on the driven slider 422. For example, in some embodiments, still as shown in FIG. 9 and FIG. 10, the driven slider 422 is of a rectangular plate structure, and correspondingly, the driven sliding groove may be a rectangular sliding groove.

It should be noted that, in some embodiments, the driven guide rail 482 may be removed from the outer housing member 30, and another side wall of the outer housing member 30 includes the driven sliding groove for insertion of the other driven slider 422.

In some possible implementations, still as shown in FIG. 8 and FIG. 9, the time delay apparatus 10 in this embodiment of the invention may further include one input gear member 60 and two output gear members 70. The input gear member 60 and the two output gear members 70 are separately disposed inside the outer housing member 30 and are separately rotatably connected to the outer housing member 30. The input gear member 60 is separately meshed with one output gear member 70 and a driving rack 411 of the driving member 41, the input gear member 60 is configured to: receive the pedal braking force output by the pedal mechanism 210 and rotate around an axis of the input gear member 60, so that the one output gear member 70 rotates and the driving member 41 moves towards the driven member 42 in the first direction. The one output gear member 70 is configured to connect to one braking apparatus 20, and the pedal braking force output by the pedal mechanism 210 is transmitted to the one braking apparatus 20 through the input gear member 60 and the one output gear member 70. The other output gear member 70 is meshed with a driven rack 421 of the driven member 42 and is configured to connect to the other braking apparatus 20. In this way, the time delay apparatus 10 can be connected to the pedal mechanism 210 and the two braking apparatuses 20 separately, so that a rear wheel 230 is braked later than a front wheel 220, thereby improving driving safety of a vehicle 200.

It may be understood that the pedal braking force may enable the input gear member 60 to autorotate, and the input gear member 60 may drive the output gear member 70 connected to the braking apparatus 20 for braking the front wheel 220 to autorotate and enable the driving member 41 to move towards the driven member 42 in the first direction (for example, the X direction in FIG. 8 or FIG. 9).

The driving member 41 moves in the first direction earlier than the driven member 42, and the output gear member 70 meshed with the input gear member 60 autorotates while the driving member 41 moves in the first direction. Therefore, one output gear member 70 autorotates first and the other output gear member 70 autorotates later, so that the time delay apparatus 10 can first transmit the braking force to the braking apparatus 20 for braking the front wheel 220 and then transmit the braking force to the braking apparatus 20 for braking the rear wheel 230.

Refer to FIG. 11. The driving rack 411 may include a plurality of driving tooth parts 4111 disposed side by side and spaced apart in the first direction (for example, an X direction in FIG. 11).

Refer to FIG. 12. The driven rack 421 may include a plurality of driven tooth parts 4211 disposed side by side and spaced apart in the first direction (for example, an X direction in FIG. 12).

In a possible implementation, as shown in FIG. 9, in the first direction, the two output gear members 70 may be located on two sides of the input gear member 60, and the input gear member 60 and the two output gear members 70 may be located on a same side of the time delay member 40. In this way, a size of the time delay apparatus 10 in a height direction can be reduced, and a volume of the time delay apparatus 10 can be reduced.

Certainly, in addition to being located on one side of the time delay member 40, in some embodiments, in the first direction, the two output gear members 70 may alternatively be located on two sides of the input gear member 60, and the input gear member 60 and the two output gear members 70 may alternatively be located on two sides of the time delay member 40.

In some possible implementations, still as shown in FIG. 9, the time delay apparatus 10 in this embodiment of the invention may further include one input steel rope 51 and two output steel ropes 52. One end of the input steel rope 51 is configured to connect to the pedal mechanism 210, and the other end of the input steel rope 51 is configured to connect to the input gear member 60. One end of one output steel rope 52 is configured to connect to one output gear member 70, and the other end of the one output steel rope 52 is configured to connect to one braking apparatus 20. One end of the other output steel rope 52 is configured to connect to the other output gear member 70, and the other end of the other output steel rope 52 is configured to connect to the other braking apparatus 20. In this way, costs of connecting the time delay apparatus 10 to the pedal mechanism 210 and the braking apparatus 20 can be reduced on the premise that the input gear member 60 is connected to the pedal mechanism 210 and the output gear member 70 is connected to the braking apparatus 20.

The input steel rope 51 plays a role of transmitting the pedal braking force and the input gear member 60 and the output gear member 70 play a role of cooperating with the time delay member 40, so that the pedal braking force can correspond to two successively generated braking forces and the two output steel ropes 52 respectively transmit the two successively generated braking forces to the two braking apparatuses 20. Therefore, in some embodiments, when a structure cooperating with the time delay member 40 is no longer the input gear member 60 and the output gear member 70, the pedal braking force may be transmitted through the input steel rope 51, and the braking force transmitted from the time delay apparatus 10 to the braking apparatus 20 may be transmitted through the output steel rope 52.

When the braking apparatus 20 brakes the two front wheels 220 or rear wheels 230, as shown in FIG. 4, each output steel rope 52 is movably connected to the input connection cavity 231 of the lever member 23 of the balancing apparatus 22 of the braking apparatus 20, so that the time delay apparatus 10 can separately transmit the same braking force to the two brakes 21 through the lever member 23.

When the braking apparatus 20 brakes the one front wheel 220 or rear wheel 230, each output steel rope 52 is connected to the transmission member of the braking apparatus 20, so that the braking force transmitted by the time delay apparatus 10 can drive the friction plate to move through the transmission member.

It may be understood that, in addition to a steel rope connection between the time delay apparatus 10 and the pedal mechanism 210 and the braking apparatus 20, another connection apparatus for transmitting a force may also be used. For example, in some embodiments, the connection apparatus (not shown in the figures) may include a plurality of connecting rods and a plurality of cables. The plurality of cables and the plurality of connecting rods are alternately connected, and a cable is disposed between two adjacent connecting rods. One end of one cable is connected to the connecting rod, and the other end of the one cable is connected to the pedal mechanism 210. One end of the other cable is connected to the connecting rod, and the other end of the other cable is connected to the time delay apparatus 10.

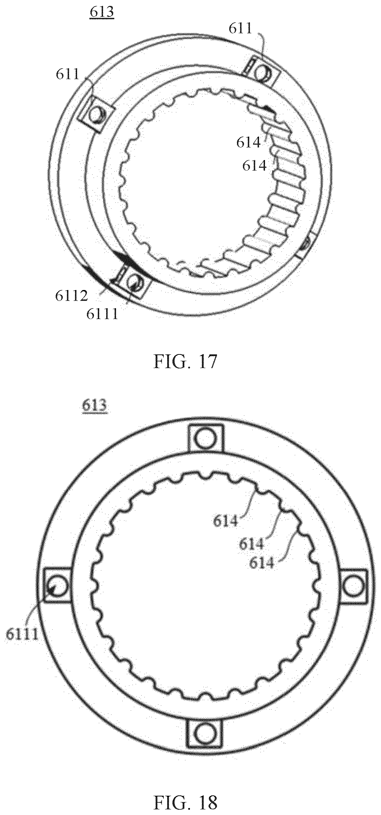

In some possible implementations, still as shown in FIG. 9, the input gear member 60 in this embodiment of the invention may include an input shaft member 61 and an input gear 62. The input gear 62 is sleeved on an outer wall of the input shaft member 61 and is fastened to the input shaft member 61. Two ends of the input shaft member 61 are separately rotatably connected to the outer housing member 30. The outer wall of the input shaft member 61 includes at least two input fastening bases 611, the at least two input fastening bases 611 are spaced apart around a circumferential direction of the input shaft member 61, and each input fastening base 611 includes an input fastening hole 6112 (as shown in FIG. 17). The other end of the input steel rope 51 passes through the input fastening hole 6112 of each input fastening base 611 and is fastened to each input fastening base 611. The input gear member 60 with such a structure is used, so that the input gear member 60 can be connected to the input steel rope 51, and the pedal braking force can drive the input gear member 60 to rotate through the input steel rope 51.

In this embodiment of the invention, a specific structure of the input shaft member 61 is not limited. For example, in some embodiments, the input shaft member 61 may include an input shaft 612 and an input shaft shoulder 613 of a hollow structure. Two ends of the input shaft 612 are respectively rotatably connected to two opposite side walls of the outer housing member 30. The input gear 62 is sleeved on an outer wall of the input shaft 612 and is fastened to the input shaft 612. The input shaft shoulder 613 is sleeved on the outer wall of the input shaft 612 and is fastened to the input shaft 612. An outer wall of the input shaft shoulder 613 includes at least two input fastening bases 611 spaced apart in a circumferential direction of the input shaft shoulder 613. The input shaft member 61 with such a structure is used, so that manufacturing difficulty of the input shaft member 61 can be reduced.

In this embodiment of the invention, a specific structure of the input shaft 612 is not limited. FIG. 16 is a schematic diagram of a structure of an input shaft according to an embodiment of the invention. For example, in some embodiments, as shown in FIG. 16, the input shaft 612 may include an input spline part 6121 and an input shaft body part 6122. The input spline part 6121 is disposed on an outer wall of the input shaft body part 6122 and is fastened to the input shaft body part 6122. The input spline part 6121 is configured to be splined to the input gear 62, so that the input shaft 612 is fastened to the input gear 62.

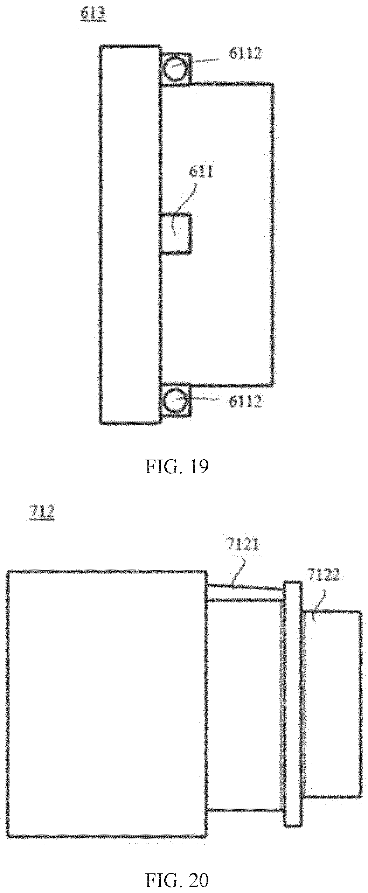

In this embodiment of the invention, a manner in which the input shaft shoulder 613 is fastened to the input shaft 612 is not specifically limited herein. For example, in some embodiments, the input shaft shoulder 613 may be connected to the input shaft 612 in an interference fit manner, and two ends of the input shaft shoulder 613 respectively press against the input gear 62 and one side wall of the outer housing member 30. In addition, a specific structure of the input shaft shoulder 613 is not limited herein. FIG. 17 is a schematic diagram of a structure of an input shaft shoulder according to an embodiment of the invention, FIG. 18 is a right view of an input shaft shoulder according to an embodiment of the invention, and FIG. 19 is a front view of an input shaft shoulder according to an embodiment of the invention. For example, in some embodiments, as shown in FIG. 17 to FIG. 19, an inner wall of the input shaft shoulder 613 may include a plurality of input interference parts 614 spaced apart in the circumferential direction of the input shaft shoulder 613, and the input interference part 614 presses against the outer wall of the input shaft 612. An axis of the input interference part 614 is parallel to an axis of the input shaft shoulder 613. A radial section of the input interference part 614 may be a semicircular shape, a semi-waist shape, or an arc shape.

In this embodiment of the invention, a specific quantity of input fastening bases 611 may be determined based on a diameter of the input steel rope 51, a diameter of the input shaft 612, and the like. This is not limited herein. For example, as shown in FIG. 19, the quantity of input fastening bases 611 is four.

In this embodiment of the invention, a manner in which the input steel rope 51 and the input fastening base 611 are fastened is not limited. For example, in some embodiments, as shown in FIG. 17, a top wall of each input fastening base 611 may further include an input lock hole 6111 communicating with the input fastening hole 6112, and the input lock hole 6111 is configured to insert an input screw. The input screw is in a threaded connection to the input fastening base 611 and presses against the input steel rope 51, so that the input fastening base 611 is fastened to the input steel rope 51.

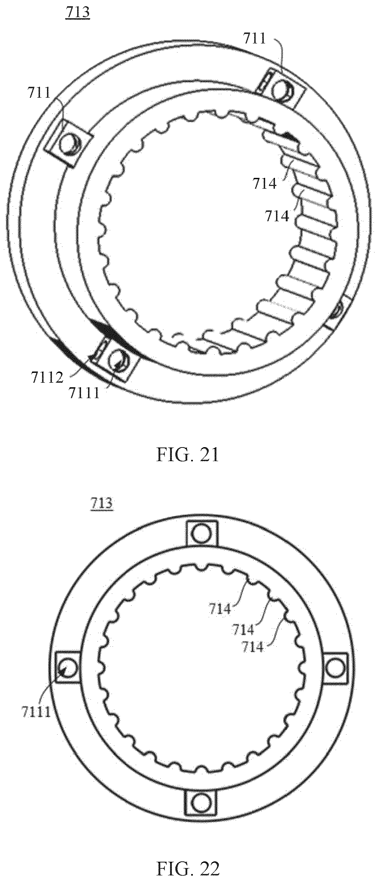

In a possible implementation, still as shown in FIG. 9, the output gear member 70 in this embodiment of the invention may include an output shaft member 71 and an output gear 72. The output gear 72 is sleeved on an outer wall of the output shaft member 71 and is fastened to the output shaft member 71. Two ends of the output shaft member 71 are separately rotatably connected to the outer housing member 30. The outer wall of the output shaft member 71 includes at least two output fastening bases 711, the at least two output fastening bases 711 are spaced apart around a circumferential direction of the output shaft member 71, and each output fastening base 711 includes an output fastening hole 7112 (as shown in FIG. 21). The other end of the output steel rope 52 passes through the output fastening hole 7112 of each output fastening base 711 and is fastened to each output fastening base 711. The output gear member 70 with such a structure is used, so that the output gear member 70 can be connected to the output steel rope 52, and the output gear member 70 rotates and the braking force can be transmitted to the braking apparatus 20 through the output steel rope 52.

In this embodiment of the invention, a specific structure of the output shaft member 71 is not limited. For example, in some embodiments, still as shown in FIG. 9, the output shaft member 71 may include an output shaft 712 and an output shaft shoulder 713 of a hollow structure. Two ends of the output shaft 712 are respectively rotatably connected to two opposite side walls of the outer housing member 30. The output gear 72 is sleeved on an outer wall of the output shaft 712 and is fastened to the output shaft 712. The output shaft shoulder 713 is sleeved on the outer wall of the output shaft 712 and is fastened to the output shaft 712. An outer wall of the output shaft shoulder 713 includes at least two output fastening bases 711 spaced apart in a circumferential direction of the output shaft shoulder 713. The output shaft member 71 with such a structure is used, so that manufacturing difficulty of the output shaft member 71 can be reduced.

In this embodiment of the invention, a specific structure of the output shaft 712 is not limited. FIG. 20 is a schematic diagram of a structure of an output shaft according to an embodiment of the invention. For example, in some embodiments, as shown in FIG. 20, the output shaft 712 may include an output spline part 7121 and an output shaft body part 7122. The output spline part 7121 is disposed on an outer wall of the output shaft body part 7122 and is fastened to the output shaft body part 7122. The output spline part 7121 is configured to be splined to the output gear 72, so that the output shaft 712 is fastened to the output gear 72.

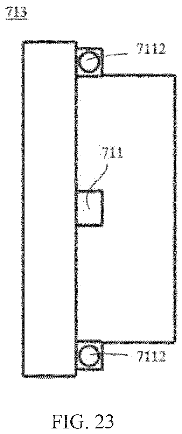

In this embodiment of the invention, a manner in which the output shaft shoulder 713 is fastened to the output shaft 712 is not specifically limited herein. For example, in some embodiments, the output shaft shoulder 713 may be connected to the output shaft 712 in an interference fit manner, and two ends of the output shaft shoulder 713 respectively press against the output gear 72 and one side wall of the outer housing member 30. In addition, a specific structure of the output shaft shoulder 713 is not limited herein. FIG. 21 is a schematic diagram of a structure of an output shaft shoulder according to an embodiment of the invention, FIG. 22 is a right view of an output shaft shoulder according to an embodiment of the invention, and FIG. 23 is a front view of an output shaft shoulder according to an embodiment of the invention. For example, in some embodiments, as shown in FIG. 21 to FIG. 23, an inner wall of the output shaft shoulder 713 may include a plurality of output interference parts 714 spaced apart in the circumferential direction of the output shaft shoulder 713, and the output interference part 714 presses against the outer wall of the output shaft 712. An axis of the output interference part 714 is parallel to an axis of the output shaft shoulder 713. A radial section of the output interference part 714 may be a semicircular shape, a semi-waist shape, or an arc shape.

In this embodiment of the invention, a specific quantity of output fastening bases 711 may be determined based on a diameter of the output steel rope 52, a diameter of the output shaft 712, and the like. This is not limited herein. For example, as shown in FIG. 21, the quantity of output fastening bases 711 may be four.

In this embodiment of the invention, a manner in which the output steel rope 52 and the output fastening base 711 are fastened is not limited. For example, in some embodiments, as shown in FIG. 21, a top wall of each output fastening base 711 may further include an output lock hole 7111 communicating with the output fastening hole 7112, and the output lock hole 7111 is configured to insert an output screw. The output screw is in a threaded connection to the output fastening base 711 and presses against the output steel rope 52, so that the output fastening base 711 is fastened to the output steel rope 52.

In the descriptions of embodiments of this invention, it should be noted that, unless otherwise clearly specified and limited, terms "mounted", "connected", and "connection" should be understood in a broad sense. For example, the terms may be used for a fastened connection, may be an indirect connection through an intermediate medium, may be an internal connection between two elements, or an interaction relationship between two elements. For a person of ordinary skill in the art, specific meanings of the foregoing terms in embodiments of this invention may be understood based on a specific situation.

An apparatus or element in embodiments of this invention or an implied apparatus or element needs to have a specific position and be constructed and operated in a specific position, and therefore cannot be construed as a limitation on embodiments of this invention. In the descriptions of embodiments of this invention, "a plurality of" means two or more, unless otherwise precisely and specifically specified.

In the specification, claims, and accompanying drawings of embodiments of this invention, terms "first", "second", "third", "fourth", and so on (if existent) are intended to distinguish between similar objects but do not necessarily indicate a specific order or sequence. It should be understood that the data termed in such a way is interchangeable in proper circumstances so that embodiments of this application described herein can be implemented in an order other than the order illustrated or described herein. In addition, terms "include", "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

A term "a plurality of" in this specification means two or more. A term "and/or" in this specification describes only an association relationship between associated objects and indicates that three relationships may exist. For example, A and/or B may indicate the following three cases: Only A exists, both A and B exist, and only B exists. In addition, a character "/" in this specification usually indicates an "or" relationship between the associated objects. In a formula, the character "/" indicates a "division" relationship between the associated objects.

It may be understood that various numbers in embodiments of this invention are merely used for distinguishing for ease of description and are not used to limit the scope of the invention, which is defined by the appended claims.

## Claims

1. An electronic mechanical braking apparatus (100), configured to brake a vehicle (200), wherein the electronic mechanical braking apparatus (100) comprises two braking apparatuses (20), one braking apparatus (20) is configured to brake front wheels of the vehicle (200), and the other braking apparatus (20) is configured to brake rear wheels of the vehicle (200), and an operation mode of the electronic mechanical braking apparatus (100) comprises a primary braking mode and a secondary braking mode;
when the electronic mechanical braking apparatus (100) operates in the primary braking mode, the two braking apparatuses (20) are separately configured to receive a motor braking force output by a braking motor;
the electronic mechanical braking apparatus (100) being **characterised in that** it further comprises one time delay apparatus (10)
and
when the electronic mechanical braking apparatus (100) operates in the secondary braking mode, the time delay apparatus (10) is configured to: receive a pedal braking force output by a pedal mechanism (210) of the vehicle (200), first transmit the braking force to the one braking apparatus (20), and then transmit the braking force to the other braking apparatus (20).

2. The electronic mechanical braking apparatus (100) according to claim 1, wherein at least one of the braking apparatuses (20) comprises two brakes (21) and one balancing apparatus (22), and each brake is configured to brake one front wheel (220) or one rear wheel (230);
when the electronic mechanical braking apparatus (100) operates in the primary braking mode, the two brakes are separately configured to receive the motor braking force output by the braking motor; and
when the electronic mechanical braking apparatus (100) operates in the secondary braking mode, the balancing apparatus (22) is configured to: receive the braking force transmitted by the time delay apparatus (10) and separately transmit a same braking force to the two brakes.

3. The electronic mechanical braking apparatus (100) according to claim 2, wherein the balancing apparatus (22) comprises a lever member (23) and a housing member (24);
the housing member (24) comprises one input hole (241) and two output holes, and the one input hole (241) and the two output holes are respectively configured to communicate outside and inside of the housing member (24); and
the lever member (23) is disposed inside the housing member (24), the lever member (23) is configured to connect the time delay apparatus (10) and the two brakes, and the braking force transmitted by the time delay apparatus (10) is separately transmitted to the two brakes through the lever member (23) at the same braking force.

4. The electronic mechanical braking apparatus (100) according to any one of claims 1 to 3, wherein the time delay apparatus (10) comprises an outer housing member (30) and a time delay member (40);
the outer housing member (30) is configured to fasten the time delay apparatus (10) and is configured to accommodate the time delay member (40), the outer housing member (30) comprises an input opening (31) and two output openings, and the input opening (31) and the two output openings are respectively configured to communicate inside and outside of the outer housing member (30);
the time delay member (40) is configured to connect the other braking apparatus (20) and the pedal mechanism (210); and
after the one braking apparatus (20) first receives the braking force transmitted by the time delay apparatus (10), the pedal mechanism (210) transmits the braking force to the other braking apparatus (20) through the time delay member (40).

5. The electronic mechanical braking apparatus (100) according to claim 4, wherein the input opening (31) is disposed on one side wall of the outer housing member (30), the two output openings are disposed on another side wall of the outer housing member (30), the one side wall of the outer housing member (30) is disposed opposite to the another side wall of the outer housing member (30), and the time delay member (40) is located between the one side wall of the outer housing member (30) and the another side wall of the outer housing member (30); or
the input opening (31) is disposed on one side wall of the outer housing member (30), the two output openings are respectively disposed on the other two side walls of the outer housing member (30), the other two side walls of the outer housing member (30) are disposed opposite to each other and are respectively connected to one side wall of the outer housing member (30), and the time delay member (40) is located between the other two side walls of the outer housing member (30).

6. The electronic mechanical braking apparatus (100) according to claim 4 or 5, wherein the time delay apparatus (10) comprises one input steel rope (51) and two output steel ropes;
the input steel rope (51) connects the pedal mechanism (210) to one output steel rope (52) and the time delay member (40) separately through the input opening (31);
the one output steel rope (52) connects the pedal mechanism (210) and the one braking apparatus (20) through one output opening (32), and the pedal braking force output by the pedal mechanism (210) is transmitted to the one braking apparatus (20) through the input steel rope (51) and the one output steel rope (52); and
the other output steel rope (52) connects the time delay member (40) and the other braking apparatus (20) through the other output opening (32), and the pedal braking force output by the pedal mechanism (210) is transmitted to the other braking apparatus (20) through the input steel rope (51), the time delay member (40), and the other output steel rope (52).

7. The electronic mechanical braking apparatus (100) according to any one of claims 1 to 3, wherein the time delay apparatus (10) comprises an outer housing member (30) and a time delay member (40), the outer housing is configured to fasten the time delay apparatus (10), the time delay member (40) is disposed inside the outer housing member (30), and the time delay member (40) comprises a driving member (41) and a driven member (42);
the driving member (41) is configured to transmit and connect to the pedal mechanism (210) and the driven member (42), and the driven member (42) is configured to connect to the other braking apparatus (20); and
when the time delay apparatus (10) first transmits the braking force to the one braking apparatus (20), the driving member (41) first moves towards the driven member (42) in a first direction and then drives the driven member (42) to move in the first direction, so that the time delay apparatus (10) then transmits the braking force to the other braking apparatus (20).

8. The electronic mechanical braking apparatus (100) according to claim 7, wherein the driving member (41) is further configured to transmit and connect the pedal mechanism (210) and the one braking apparatus (20), the driving member (41) is configured to: receive the pedal braking force output by the pedal mechanism (210), transmit the braking force to the one braking apparatus (20), and first move towards the driven member (42) in the first direction and then drive the driven member (42) to move in the first direction.

9. The electronic mechanical braking apparatus (100) according to claim 7, wherein an axis of the driving member (41) and an axis of the driven member (42) are parallel to the first direction, and an end that is of the driving member (41) and that faces the driven member (42) is movably connected to an end that is of the driven member (42) and that faces the driving member (41); and
the driving member (41) is configured to: receive the braking force output by the pedal mechanism (210) and first move towards the driven member (42) in the first direction and then drive the driven member (42) to move in the first direction; or
the driving member (41) is configured to: receive a restoring force output by the pedal mechanism (210) and first move backwards the driven member (42) in the first direction and then drive the driven member (42) to move in the first direction, to restore displacement that is of the driving member (41) and the driven member (42) and that is relative to the outer housing member (30) due to the pedal braking force.

10. The electronic mechanical braking apparatus (100) according to claim 9, wherein the one end that is of the driving member (41) and that faces the driven member (42) comprises a time delay cavity (43) with a connection opening (431) facing the driven member (42), the one end that is of the driven member (42) and that faces the driving member (41) comprises a time delay rod (44), the time delay rod (44) may movably be disposed inside the time delay cavity (43) through the connection opening (431), and an axis of the time delay rod (44) is parallel to the first direction; or
the one end that is of the driving member (41) and that faces the driven member (42) comprises a time delay rod (44), an axis of the time delay rod (44) is parallel to the first direction, the one end that is of the driven member (42) and that faces the driving member (41) comprises a time delay cavity (43) with a connection opening (431) facing the driven member (42), and the time delay rod (44) may movably be disposed inside the time delay cavity (43) through the connection opening (431).

11. The electronic mechanical braking apparatus (100) according to claim 7, wherein the driving member (41) and the driven member (42) are separately slidably connected to the outer housing member (30), and sliding directions that are of the driving member (41) and the driven member (42) and that are relative to the outer housing member (30) are parallel to the first direction.

12. The electronic mechanical braking apparatus (100) according to claim 7, wherein the time delay apparatus (10) comprises one input gear (62) member (60) and two output gear (72) members, and the input gear (62) member (60) and the two output gear (72) members are separately disposed inside the outer housing member (30) and are separately rotatably connected to the outer housing member (30);
the input gear (62) member (60) is separately meshed with one output gear (72) member (70) and a driving rack (411) of the driving member (41), the input gear (62) member (60) is configured to: receive the pedal braking force output by the pedal mechanism (210) and rotate, so that the one output gear (72) member (70) rotates and the driving member (41) moves towards the driven member (42) in the first direction;
the one output gear (72) member (70) is configured to connect to the one braking apparatus (20), and the pedal braking force output by the pedal mechanism (210) is transmitted to the one braking apparatus (20) through the input gear (62) member (60) and the one output gear (72) member (70); and
the other output gear (72) member (70) is meshed with a driven rack (421) of the driven member (42) and is configured to connect to the other braking apparatus (20).

13. The electronic mechanical braking apparatus (100) according to claim 12, wherein in the first direction, the two output gear (72) members are respectively located on two sides of the input gear (62) member (60), and the input gear (62) member (60) and the two output gear (72) members are located on a same side of the time delay member (40); or
in the first direction, the two output gear (72) members are respectively located on two sides of the input gear (62) member (60), and the input gear (62) member (60) and the two output gear (72) members are respectively located on two sides of the time delay member (40).

14. The electronic mechanical braking apparatus (100) according to claim 12 or 13, wherein the time delay apparatus (10) comprises one input steel rope (51) and two output steel ropes;
one end of the input steel rope (51) is configured to connect to the pedal mechanism (210), and the other end of the input steel rope (51) is configured to connect to the input gear (62) member (60);
one end of one output steel rope (52) is configured to connect to the one output gear (72) member (70), and the other end of the one output steel rope (52) is configured to connect to the one braking apparatus (20); and
one end of the other output rope is configured to connect to the other output gear (72) member (70), and the other end of the other output rope is configured to connect to the other braking apparatus (20).

15. A vehicle (200), comprising wheels, a pedal mechanism (210), and the electronic mechanical braking apparatus (100) according to any one of claims 1 to 14, wherein
a time delay apparatus (10) of the electronic mechanical braking apparatus (100) is connected to the pedal mechanism (210) and is configured to brake the wheels.

## Patentansprüche

1. Elektronisch-mechanische Bremsvorrichtung (100), die konfiguriert ist, ein Fahrzeug (200) zu bremsen, wobei die elektronisch-mechanische Bremsvorrichtung (100) zwei Bremsvorrichtungen (20) umfasst, wobei eine Bremsvorrichtung (20) konfiguriert ist, Vorderräder des Fahrzeugs (200) zu bremsen, und die andere Bremsvorrichtung (20) konfiguriert ist, Hinterräder des Fahrzeugs (200) zu bremsen, und eine Betriebsart der elektronisch-mechanischen Bremsvorrichtung (100) eine primäre Bremsbetriebsart und eine sekundäre Bremsbetriebsart umfasst;
wobei dann, wenn die elektronisch-mechanische Bremsvorrichtung (100) in der primären Bremsbetriebsart arbeitet, die zwei Bremsvorrichtungen (20) getrennt konfiguriert sind, eine durch einen Bremsmotor ausgegebene Motorbremskraft zu empfangen;
wobei die elektronisch-mechanische Bremsvorrichtung (100) **dadurch gekennzeichnet ist, dass** sie ferner eine Zeitverzögerungsvorrichtung (10) umfasst und
die Zeitverzögerungsvorrichtung (10) konfiguriert ist, dann, wenn die elektronisch-mechanische Bremsvorrichtung (100) in der sekundären Bremsbetriebsart arbeitet, eine Pedalbremskraft, die durch einen Pedalmechanismus (210) des Fahrzeugs (200) ausgegeben wird, zu empfangen, zuerst die Bremskraft an die eine Bremsvorrichtung (20) zu übertragen und dann die Bremskraft an die andere Bremsvorrichtung (20) zu übertragen.

2. Elektronisch-mechanische Bremsvorrichtung (100) nach Anspruch 1, wobei mindestens eine der Bremsvorrichtungen (20) zwei Bremsen (21) und eine Ausgleichsvorrichtung (22) umfasst und jede Bremse konfiguriert ist, ein Vorderrad (220) oder ein Hinterrad (230) zu bremsen;
wobei dann, wenn die elektronisch-mechanische Bremsvorrichtung (100) in der primären Bremsbetriebsart arbeitet, die beiden Bremsen getrennt konfiguriert sind, die durch den Bremsmotor ausgegebene Motorbremskraft zu empfangen; und
wobei dann, wenn die elektronisch-mechanische Bremsvorrichtung (100) in der sekundären Bremsbetriebsart arbeitet, die Ausgleichsvorrichtung (22) konfiguriert ist zum Empfangen der durch die Zeitverzögerungsvorrichtung (10) übertragenen Bremskraft und zum getrennten Übertragen derselben Bremskraft an die beiden Bremsen.

3. Elektronisch-mechanische Bremsvorrichtung (100) nach Anspruch 2, wobei die Ausgleichsvorrichtung (22) ein Hebelelement (23) und ein Gehäuseelement (24) umfasst;
wobei das Gehäuseelement (24) ein Eingangsloch (241) und zwei Ausgangslöcher umfasst und das eine Eingangsloch (241) und die beiden Ausgangslöcher jeweils konfiguriert sind, außerhalb und innerhalb des Gehäuseelements (24) zu kommunizieren; und
wobei das Hebelelement (23) innerhalb des Gehäuseelements (24) angeordnet ist, das Hebelelement (23) konfiguriert ist, die Zeitverzögerungsvorrichtung (10) und die beiden Bremsen zu verbinden, und die durch die Zeitverzögerungsvorrichtung (10) übertragene Bremskraft durch das Hebelelement (23) getrennt an die beiden Bremsen bei derselben Bremskraft übertragen wird.

4. Elektronisch-mechanische Bremsvorrichtung (100) nach einem der Ansprüche 1 bis 3, wobei die Zeitverzögerungsvorrichtung (10) ein äußeres Gehäuseelement (30) und ein Zeitverzögerungselement (40) umfasst;
wobei das äußere Gehäuseelement (30) konfiguriert ist, die Zeitverzögerungsvorrichtung (10) zu befestigen, und konfiguriert ist, das Zeitverzögerungselement (40) aufzunehmen, wobei das äußere Gehäuseelement (30) eine Eingangsöffnung (31) und zwei Ausgangsöffnungen umfasst und die Eingangsöffnung (31) und die beiden Ausgangsöffnungen jeweils konfiguriert sind, innerhalb und außerhalb des äußeren Gehäuseelements (30) zu kommunizieren; wobei das Zeitverzögerungselement (40) konfiguriert ist, die andere Bremsvorrichtung (20) und den Pedalmechanismus (210) zu verbinden; und
nachdem die eine Bremsvorrichtung (20) zuerst die durch die Zeitverzögerungsvorrichtung (10) übertragene Bremskraft empfängt, der Pedalmechanismus (210) die Bremskraft durch das Zeitverzögerungselement (40) an die andere Bremsvorrichtung (20) überträgt.

5. Elektronisch-mechanische Bremsvorrichtung (100) nach Anspruch 4, wobei die Eingangsöffnung (31) auf einer Seitenwand des äußeren Gehäuseelements (30) angeordnet ist, die beiden Ausgangsöffnungen auf einer anderen Seitenwand des äußeren Gehäuseelements (30) angeordnet sind, die eine Seitenwand des äußeren Gehäuseelements (30) entgegengesetzt zu der anderen Seitenwand des äußeren Gehäuseelements (30) angeordnet ist und das Zeitverzögerungselement (40) sich zwischen der einen Seitenwand des äußeren Gehäuseelements (30) und der anderen Seitenwand des äußeren Gehäuseelements (30) befindet; oder
die Eingangsöffnung (31) auf einer Seitenwand des äußeren Gehäuseelements (30) angeordnet ist, die beiden Ausgangsöffnungen jeweils auf den anderen beiden Seitenwänden des äußeren Gehäuseelements (30) angeordnet sind, die anderen zwei Seitenwände des äußeren Gehäuseelements (30) einander gegenüber angeordnet sind und jeweils mit einer Seitenwand des äußeren Gehäuseelements (30) verbunden sind und das Zeitverzögerungselement (40) sich zwischen den anderen zwei Seitenwänden des äußeren Gehäuseelements (30) befindet.

6. Elektronisch-mechanische Bremsvorrichtung (100) nach Anspruch 4 oder 5, wobei die Zeitverzögerungsvorrichtung (10) ein Eingangsstahlseil (51) und zwei Ausgangsstahlseile umfasst;
wobei das Eingangsstahlseil (51) den Pedalmechanismus (210) mit einem Ausgangsstahlseil (52) und dem Zeitverzögerungselement (40) getrennt durch die Eingangsöffnung (31) verbindet;
das eine Ausgangsstahlseil (52) den Pedalmechanismus (210) und die eine Bremsvorrichtung (20) durch eine Ausgangsöffnung (32) verbindet und die durch den Pedalmechanismus (210) ausgegebene Pedalbremskraft an die eine Bremsvorrichtung (20) durch das Eingangsstahlseil (51) und das eine Ausgangsstahlseil (52) übertragen wird; und
das andere Ausgangsstahlseil (52) das Zeitverzögerungselement (40) und die andere Bremsvorrichtung (20) durch die andere Ausgangsöffnung (32) verbindet und die durch den Pedalmechanismus (210) ausgegebene Pedalbremskraft an die andere Bremsvorrichtung (20) durch das Eingangsstahlseil (51), das Zeitverzögerungselement (40) und das andere Ausgangsstahlseil (52) übertragen wird.

7. Elektronisch-mechanische Bremsvorrichtung (100) nach einem der Ansprüche 1 bis 3, wobei die Zeitverzögerungsvorrichtung (10) ein äußeres Gehäuseelement (30) und ein Zeitverzögerungselement (40) umfasst, wobei das äußere Gehäuse konfiguriert ist, die Zeitverzögerungsvorrichtung (10) zu befestigen, das Zeitverzögerungselement (40) innerhalb des äußeren Gehäuseelements (30) angeordnet ist und das Zeitverzögerungselement (40) ein Antriebselement (41) und ein angetriebenes Element (42) umfasst;
wobei das Antriebselement (41) konfiguriert ist, an den Pedalmechanismus (210) und das angetriebene Element (42) zu übertragen und sich mit diesen zu verbinden, und
das angetriebene Element (42) konfiguriert ist, sich mit der anderen Bremsvorrichtung (20) zu verbinden; und
dann, wenn die Zeitverzögerungsvorrichtung (10) zuerst die Bremskraft an die eine Bremsvorrichtung (20) überträgt, das Antriebselement (41) sich zuerst in Richtung des angetriebenen Elements (42) in einer ersten Richtung bewegt und dann das angetriebene Element (42) antreibt, sich in der ersten Richtung zu bewegen, so dass die Zeitverzögerungsvorrichtung (10) dann die Bremskraft an die andere Bremsvorrichtung (20) überträgt.

8. Elektronisch-mechanische Bremsvorrichtung (100) nach Anspruch 7, wobei das Antriebselement (41) ferner konfiguriert ist, den Pedalmechanismus (210) und die eine Bremsvorrichtung (20) zu übertragen und diese zu verbinden, wobei das Antriebselement (41) konfiguriert ist zum Empfangen der durch den Pedalmechanismus (210) ausgegebenen Pedalbremskraft, Übertragen der Bremskraft an die eine Bremsvorrichtung (20) und zuerst Bewegen in Richtung des angetriebenen Elements (42) in der ersten Richtung und dann Antreiben des angetriebenen Elements (42), sich in der ersten Richtung zu bewegen.

9. Elektronisch-mechanische Bremsvorrichtung (100) nach Anspruch 7, wobei eine Achse des Antriebselements (41) und eine Achse des angetriebenen Elements (42) zu der ersten Richtung parallel sind und ein Ende des Antriebselements (41), das dem angetriebenen Element (42) zugewandt ist, beweglich mit einem Ende des angetriebenen Elements (42) verbunden ist, das dem Antriebselement (41) zugewandt ist; und
das Antriebselement (41) konfiguriert ist zum Empfangen der durch den Pedalmechanismus (210) ausgegebenen Bremskraft und zuerst Bewegen in Richtung des angetriebenen Elements (42) in der ersten Richtung und dann Antreiben des angetriebenen Elements (42), sich in der ersten Richtung zu bewegen; oder
das Antriebselement (41) konfiguriert ist zum Empfangen einer Wiederherstellungskraft, die durch den Pedalmechanismus (210) ausgegeben wird, und zuerst Bewegen des angetriebenen Elements (42) rückwärts in der ersten Richtung und dann Antreiben des angetriebenen Elements (42), sich in der ersten Richtung zu bewegen, um eine Verschiebung, die durch die Pedalbremskraft von dem Antriebselement (41) und dem angetriebenen Element (42) bewirkt wird und die relativ zu dem äußeren Gehäuseelement (30) erfolgt, wiederherzustellen.

10. Elektronisch-mechanische Bremsvorrichtung (100) nach Anspruch 9, wobei das eine Ende des Antriebselements (41), das dem angetriebenen Element (42) zugewandt ist, einen Zeitverzögerungshohlraum (43) mit einer Verbindungsöffnung (431), die dem angetriebenen Element (42) zugewandt ist, umfasst, wobei das eine Ende des angetriebenen Elements (42), das dem Antriebselement (41) zugewandt ist, einen Zeitverzögerungsstab (44) umfasst, wobei der Zeitverzögerungsstab (44) innerhalb des Zeitverzögerungshohlraums (43) durch die Verbindungsöffnung (431) beweglich angeordnet sein kann und eine Achse des Zeitverzögerungsstabs (44) parallel zu der ersten Richtung ist; oder
das eine Ende des Antriebselements (41), das dem angetriebenen Element (42) zugewandt ist, einen Zeitverzögerungsstab (44) umfasst, eine Achse des Zeitverzögerungsstabs (44) parallel zu der ersten Richtung ist, wobei das eine Ende des angetriebenen Elements (42), das dem Antriebselement (41) zugewandt ist, einen Zeitverzögerungshohlraum (43) mit einer Verbindungsöffnung (431), die dem angetriebenen Element (42) zugewandt ist, umfasst und der Zeitverzögerungsstab (44) innerhalb des Zeitverzögerungshohlraums (43) durch die Verbindungsöffnung (431) beweglich angeordnet sein kann.

11. Elektronisch-mechanische Bremsvorrichtung (100) nach Anspruch 7, wobei das Antriebselement (41) und das angetriebene Element (42) getrennt gleitfähig mit dem äußeren Gehäuseelement (30) verbunden sind und Gleitrichtungen des Antriebselements (41) und des angetriebenen Elements (42), die relativ zu dem äußeren Gehäuseelement (30) erfolgen, parallel zu der ersten Richtung sind.

12. Elektronisch-mechanische Bremsvorrichtung (100) nach Anspruch 7, wobei die Zeitverzögerungsvorrichtung (10) ein Eingangszahnradelement (62, 60) und zwei Ausgangszahnradelemente (72) umfasst und das Eingangszahnradelement (62, 60) und die beiden Ausgangszahnradelemente (72) getrennt innerhalb des äußeren Gehäuseelements (30) angeordnet sind und getrennt drehbar mit dem äußeren Gehäuseelement (30) verbunden sind;
wobei das Eingangszahnradelement (62, 60) getrennt mit einem Ausgangszahnradelement (72, 70) und einer Antriebstange (411) des Antriebselements (41) ineinandergreift, wobei das Eingangszahnradelement (62, 60) konfiguriert ist zum Empfangen der durch den Pedalmechanismus (210) ausgegebenen Pedalbremskraft und zum Drehen, so dass sich das eine Ausgangszahnradelement (72, 70) dreht und sich das Antriebselement (41) in Richtung des angetriebenen Elements (42) in der ersten Richtung bewegt;
wobei das eine Ausgangszahnradelement (72, 70) konfiguriert ist, sich mit der einen Bremsvorrichtung (20) zu verbinden, und die durch den Pedalmechanismus (210) ausgegebene Pedalbremskraft an die eine Bremsvorrichtung (20) durch das Eingangszahnradelement (62, 60) und das eine Ausgangszahnradelement (72, 70) übertragen wird; und
wobei das andere Ausgangszahnradelement (72, 70) mit einer angetriebenen Zahnstange (421) des angetriebenen Elements (42) ineinandergreift und konfiguriert ist, sich mit der anderen Bremsvorrichtung (20) zu verbinden.

13. Elektronisch-mechanische Bremsvorrichtung (100) nach Anspruch 12, wobei die beiden Ausgangszahnradelemente (72) sich in der ersten Richtung jeweils auf zwei Seiten des Eingangszahnradelements (62, 60) befinden und sich das Eingangszahnradelement (62, 60) und die beiden Ausgangszahnradelemente (72) auf derselben Seite des Zeitverzögerungselements (40) befinden; oder
die beiden Ausgangszahnradelemente (72) sich in der ersten Richtung jeweils auf zwei Seiten des Eingangszahnradelements (62, 60) befinden und das Eingangszahnradelement (62, 60) und die beiden Ausgangszahnradelemente (72) sich jeweils auf zwei Seiten des Zeitverzögerungselements (40) befinden.

14. Elektronisch-mechanische Bremsvorrichtung (100) nach Anspruch 12 oder 13, wobei die Zeitverzögerungsvorrichtung (10) ein Eingangsstahlseil (51) und zwei Ausgangsstahlseile umfasst;
wobei ein Ende des Eingangsstahlseils (51) konfiguriert ist, sich mit dem Pedalmechanismus (210) zu verbinden und das andere Ende des Eingangsstahlseils (51) konfiguriert ist, sich mit dem Eingangszahnradelement (62, 60) zu verbinden; wobei ein Ende eines Ausgangsstahlseils (52) konfiguriert ist, sich mit dem einen Ausgangszahnradelement (72, 70) zu verbinden, und das andere Ende des einen Ausgangsstahlseils (52) konfiguriert ist, sich mit der einen Bremsvorrichtung (20) zu verbinden; und
ein Ende des anderen Ausgangsseils konfiguriert ist, sich mit dem anderen Ausgangszahnradelement (72, 70) zu verbinden, und das andere Ende des anderen Ausgangsseils konfiguriert ist, sich mit der anderen Bremsvorrichtung (20) zu verbinden.

15. Fahrzeug (200), das Räder, einen Pedalmechanismus (210) und die elektronisch-mechanische Bremsvorrichtung (100) nach einem der Ansprüche 1 bis 14 umfasst, wobei
eine Zeitverzögerungsvorrichtung (10) der elektronisch-mechanischen Bremsvorrichtung (100) mit dem Pedalmechanismus (210) verbunden ist und konfiguriert ist, die Räder zu bremsen.

## Revendications

1. Dispositif de freinage mécanique électronique (100), configuré pour freiner un véhicule (200), dans lequel le dispositif de freinage mécanique électronique (100) comprend deux dispositifs de freinage (20), un dispositif de freinage (20) est configuré pour freiner des roues avant du véhicule (200), et l'autre dispositif de freinage (20) est configuré pour freiner des roues arrière du véhicule (200), et un mode de fonctionnement du dispositif de freinage mécanique électronique (100) comprend un mode de freinage primaire et un mode de freinage secondaire ;
lorsque le dispositif de freinage mécanique électronique (100) fonctionne dans le mode de freinage primaire, les deux dispositifs de freinage (20) sont configurés séparément pour recevoir une force de freinage moteur délivrée par un moteur de freinage : le dispositif de freinage mécanique électronique (100) étant **caractérisé en ce qu'**il comprend en outre un dispositif de temps de réponse (10)
et
lorsque le dispositif de freinage mécanique électronique (100) fonctionne dans le mode de freinage secondaire, le dispositif de temps de réponse (10) est configuré pour : recevoir une force de freinage de pédale délivrée par un mécanisme de pédale (210) du véhicule (200), d'abord transmettre la force de freinage audit un dispositif de freinage (20), et ensuite transmettre la force de freinage audit autre dispositif de freinage (20).

2. Dispositif de freinage mécanique électronique (100) selon la revendication 1, dans lequel au moins l'un des dispositifs de freinage (20) comprend deux freins (21) et un dispositif d'équilibrage (22), et chaque frein est configuré pour freiner une roue avant (220) ou une roue arrière (230) ;
lorsque le dispositif de freinage mécanique électronique (100) fonctionne dans le mode de freinage primaire, les deux freins sont configurés séparément pour recevoir la force de freinage de moteur délivrée par le moteur de freinage ; et
lorsque le dispositif de freinage mécanique électronique (100) fonctionne dans le mode de freinage secondaire, le dispositif d'équilibrage (22) est configuré pour : recevoir la force de freinage transmise par le dispositif de temps de réponse (10) et transmettre séparément une même force de freinage aux deux freins.

3. Dispositif de freinage mécanique électronique (100) selon la revendication 2, dans lequel le dispositif d' équilibrage (22) comprend un élément de levier (23) et un élément de logement (24) ;
l'élément de logement (24) comprend un trou d'entrée (241) et deux trous de sortie, et le trou d'entrée (241) et les deux trous de sortie sont respectivement configurés pour communiquer à l'extérieur et à l'intérieur de l'élément de logement (24) ; et l'élément de levier (23) est disposé à l'intérieur de l'élément de logement (24), l'élément de levier (23) est configuré pour relier le dispositif de temps de réponse (10) et les deux freins, et la force de freinage transmise par le dispositif de temps de réponse (10) est transmise séparément aux deux freins par le biais de l'élément de levier (23) à la même force de freinage.

4. Dispositif de freinage mécanique électronique (100) selon l'une quelconque des revendications 1 à 3, dans lequel le dispositif de temps de réponse (10) comprend un élément de logement externe (30) et un élément de temps de réponse (40) ; l'élément de logement externe (30) est configuré pour fixer le dispositif de temps de réponse (10) et est configuré pour accueillir l'élément de temps de réponse (40), l'élément de logement externe (30) comprend une ouverture d'entrée (31) et deux ouvertures de sortie, et l'ouverture d'entrée (31) et les deux ouvertures de sortie sont respectivement configurées pour communiquer à l'intérieur et à l'extérieur de l'élément de logement externe (30) ;
l'élément de temps de réponse (40) est configuré pour relier l'autre dispositif de freinage (20) et le mécanisme de pédale (210) ; et
après que ledit un dispositif de freinage (20) d'abord reçoit la force de freinage transmise par le dispositif de temps de réponse (10), le mécanisme de pédale (210) transmet la force de freinage à l'autre dispositif de freinage (20) par le biais de l'élément de temps de réponse (40).

5. Dispositif de freinage mécanique électronique (100) selon la revendication 4, dans lequel l'ouverture d'entrée (31) est disposée sur une paroi latérale de l'élément de logement externe (30), les deux ouvertures de sortie sont disposées sur une autre paroi latérale de l'élément de logement externe (30), l'une paroi latérale de l'élément de logement externe (30) est disposée à l'opposé de l'autre paroi latérale de l'élément de logement externe (30), et l'élément de temps de réponse (40) est situé entre l'une paroi latérale de l'élément de logement externe (30) et l'autre paroi latérale de l'élément de logement externe (30) ; ou
l'ouverture d'entrée (31) est disposée sur une paroi latérale de l'élément de logement externe (30), les deux ouvertures de sortie sont respectivement disposées sur les deux autres parois latérales de l'élément de logement externe (30), les deux autres parois latérales de l'élément de logement externe (30) sont disposées à l'opposé l'une de l'autre et sont respectivement reliées à une paroi latérale de l'élément de logement externe (30), et l'élément de temps de réponse (40) est situé entre les deux autres parois latérales de l'élément de logement externe (30).

6. Dispositif de freinage mécanique électronique (100) selon la revendication 4 ou la revendication 5, dans lequel le dispositif de temps de réponse (10) comprend un câble d'acier d'entrée (51) et deux câbles d'acier de sortie ;
le câble d'acier d'entrée (51) relie le mécanisme de pédale (210) à un câble d'acier de sortie (52) et à l'élément de temps de réponse (40) séparément à travers l'ouverture d'entrée (31) ;
ledit un câble d'acier de sortie (52) relie le mécanisme de pédale (210) et ledit un dispositif de freinage (20) à travers une ouverture de sortie (32), et la force de freinage de pédale délivrée par le mécanisme de pédale (210) est transmise audit un dispositif de freinage (20) par le biais du câble d'acier d'entrée (51) et dudit un câble d'acier de sortie (52) ; et
l'autre câble d'acier de sortie (52) relie l'élément de temps de réponse (40) et l'autre dispositif de freinage (20) à travers l'autre ouverture de sortie (32), et la force de freinage de pédale délivrée par le mécanisme de pédale (210) est transmise à l'autre dispositif de freinage (20) par le biais du câble d'acier d'entrée (51), de l'élément de temps de réponse (40), et de l'autre câble d'acier de sortie (52).

7. Dispositif de freinage mécanique électronique (100) selon l'une quelconque des revendications 1 à 3, dans lequel le dispositif de temps de réponse (10) comprend un élément de logement externe (30) et un élément de temps de réponse (40), le logement externe est configuré pour fixer le dispositif de temps de réponse (10), l'élément de temps de réponse (40) est disposé à l'intérieur de l'élément de logement externe (30), et l'élément de temps de réponse (40) comprend un élément d'entraînement (41) et un élément entraîné (42) ;
l'élément d'entraînement (41) est configuré pour transmettre et se relier au mécanisme de pédale (210) et à l'élément entraîné (42), et l'élément entraîné (42) est configuré pour se relier à l'autre dispositif de freinage (20) ; et
lorsque le dispositif de temps de réponse (10) d'abord transmet la force de freinage audit un dispositif de freinage (20), l'élément d'entraînement (41) d'abord se déplace vers l'élément entraîné (42) dans une première direction et entraîne ensuite l'élément entraîné (42) à se déplacer dans la première direction, de sorte que le dispositif de temps de réponse (10) transmette ensuite la force de freinage audit autre dispositif de freinage (20).

8. Dispositif de freinage mécanique électronique (100) selon la revendication 7, dans lequel l'élément d'entraînement (41) est en outre configuré pour transmettre et relier le mécanisme de pédale (210) et ledit un dispositif de freinage (20), l'élément d'entraînement (41) est configuré pour : recevoir la force de freinage de pédale délivrée par le mécanisme de pédale (210), transmettre la force de freinage audit un dispositif de freinage (20), et d'abord se déplacer vers l'élément entraîné (42) dans la première direction et ensuite entraîner l'élément entraîné (42) à se déplacer dans la première direction.

9. Dispositif de freinage mécanique électronique (100) selon la revendication 7, dans lequel un axe de l'élément d'entraînement (41) et un axe de l'élément entraîné (42) sont parallèles à la première direction, et une extrémité qui est de l'élément d'entraînement (41) et qui fait face à l'élément entraîné (42) est reliée de manière mobile à une extrémité qui est de l'élément entraîné (42) et qui fait face à l'élément d'entraînement (41) ; et
l'élément d'entraînement (41) est configuré pour : recevoir la force de freinage délivrée par le mécanisme de pédale (210) et d'abord se déplacer vers l'élément entraîné (42) dans la première direction et ensuite entraîner l'élément entraîné (42) à se déplacer dans la première direction ; ou
l'élément d'entraînement (41) est configuré pour : recevoir une force de rappel délivrée par le mécanisme de pédale (210) et d'abord se déplacer vers l'arrière l'élément entraîné (42) dans la première direction et ensuite entraîner l'élément entraîné (42) à se déplacer dans la première direction, pour rappeler le déplacement qui est de l'élément d'entraînement (41) et de l'élément entraîné (42) et qui est relatif à l'élément de logement externe (30) en raison de la force de freinage de pédale.

10. Dispositif de freinage mécanique électronique (100) selon la revendication 9, dans lequel l'une extrémité qui est de l'élément d'entraînement (41) et qui fait face à l'élément entraîné (42) comprend une cavité de temps de réponse (43) avec une ouverture de liaison (431) faisant face à l'élément entraîné (42), l'une extrémité qui est de l'élément entraîné (42) et qui fait face à l'élément d'entraînement (41) comprend une tige de temps de réponse (44), la tige de temps de réponse (44) peut être disposée de manière mobile à l'intérieur de la cavité de temps de réponse (43) à travers l'ouverture de liaison (431), et un axe de la tige de temps de réponse (44) est parallèle à la première direction ; ou
l'une extrémité qui est de l'élément d'entraînement (41) et qui fait face à l'élément entraîné (42) comprend une tige de temps de réponse (44), un axe de la tige de temps de réponse (44) est parallèle à la première direction, l'une extrémité qui est de l'élément entraîné (42) et qui fait face à l'élément d'entraînement (41) comprend une cavité de temps de réponse (43) avec une ouverture de liaison (431) faisant face à l'élément entraîné (42), et la tige de temps de réponse (44) peut être disposée de manière mobile à l'intérieur de la cavité de temps de réponse (43) à travers l'ouverture de liaison (431).

11. Dispositif de freinage mécanique électronique (100) selon la revendication 7, dans lequel l'élément d'entraînement (41) et l'élément entraîné (42) sont reliés de manière coulissante séparément à l'élément de logement externe (30), et des directions de coulissement qui sont de l'élément d'entraînement (41) et de l'élément entraîné (42) et qui sont relatives à l'élément de logement externe (30) sont parallèles à la première direction.

12. Dispositif de freinage mécanique électronique (100) selon la revendication 7, dans lequel le dispositif de temps de réponse (10) comprend un élément (60) d'engrenage d'entrée (62) et deux éléments d'engrenage de sortie (72), et l'élément (60) d'engrenage d'entrée (62) et les deux éléments d'engrenage de sortie (72) sont disposés séparément à l'intérieur de l'élément de logement externe (30) et sont reliés de manière rotative séparément à l'élément de logement externe (30) ;
l'élément (60) d'engrenage d'entrée (62) est engrené séparément avec un élément (70) d'engrenage de sortie (72) et une crémaillère d'entraînement (411) de l'élément d'entraînement (41), l'élément (60) d'engrenage d'entrée (62) est configuré pour :
recevoir la force de freinage de pédale délivrée par le mécanisme de pédale (210) et entrer en rotation, de sorte que l'élément (70) d'engrenage de sortie (72) entre en rotation et que l'élément d'entraînement (41) se déplace vers l'élément entraîné (42) dans la première direction ;
ledit un élément (70) d'engrenage de sortie (72) est configuré pour se relier audit un dispositif de freinage (20), et la force de freinage de pédale délivrée par le mécanisme de pédale (210) est transmise audit un dispositif de freinage (20) par le biais de l'élément (60) d'engrenage d'entrée (62) et dudit un élément (70) d'engrenage de sortie (72) ; et
l'autre élément (70) d'engrenage de sortie (72) est engrené avec une crémaillère entraînée (421) de l'élément entraîné (42) et est configuré pour se relier à l'autre dispositif de freinage (20).

13. Dispositif de freinage mécanique électronique (100) selon la revendication 12, dans lequel dans la première direction, les deux éléments d'engrenage de sortie (72) sont respectivement situés sur deux côtés de l'élément (60) d'engrenage d'entrée (62), et l'élément (60) d'engrenage d'entrée (62) et les deux éléments d'engrenage de sortie (72) sont situés sur un même côté de l'élément de temps de réponse (40) ; ou
dans la première direction, les deux éléments d'engrenage de sortie (72) sont respectivement situés sur deux côtés de l'élément (60) d'engrenage d'entrée (62), et l'élément (60) d'engrenage d'entrée (62) et les deux éléments d'engrenage de sortie (72) sont respectivement situés sur deux côtés de l'élément de temps de réponse (40).

14. Dispositif de freinage mécanique électronique (100) selon la revendication 12 ou revendication 13, dans lequel le dispositif de temps de réponse (10) comprend un câble d'acier d'entrée (51) et deux câbles d'acier de sortie ;
une extrémité du câble d'acier d'entrée (51) est configurée pour être reliée au mécanisme de pédale (210), et l'autre extrémité du câble d'acier d'entrée (51) est configurée pour être reliée à l'élément (60) d'engrenage d'entrée (62) ;
une extrémité d'un câble d'acier de sortie (52) est configurée pour se relier audit un élément (70) d'engrenage de sortie (72), et l'autre extrémité du câble d'acier de sortie (52) est configurée pour se relier audit un dispositif de freinage (20) ; et
une extrémité de l'autre câble de sortie est configurée pour se relier à l'autre élément (70) d'engrenage de sortie (72), et l'autre extrémité de l'autre câble de sortie est configurée pour se relier à l'autre dispositif de freinage (20).

15. Véhicule (200), comprenant des roues, un mécanisme de pédale (210), et le dispositif de freinage mécanique électronique (100) selon l'une quelconque des revendications 1 à 14, dans lequel
un dispositif de temps de réponse (10) du dispositif de freinage mécanique électronique (100) est relié au mécanisme de pédale (210) et est configuré pour freiner les roues.
